# EUROPEAN PATENT APPLICATION

(11) **EP 2 365 468 A1**
(43) Date of publication of application: **14.09.2011**
(21) Application number: 11169023.6
(22) Date of filing: 25.04.2007
(51) Int. Cl.: G06Q 20/00, G06Q 40/00

(54) **Systems and methods for conducting financial transactions over a network**

(30) Priority: 25.04.2006 US 745561 P; 12.12.2006 US 609775; 12.12.2006 US 609779; 12.12.2006 US 609785; 12.12.2006 US 609792
(62) Divisional of application: 07732550.4
(71) Applicant: UC Group Ltd., Bromley, Kent BR1 3TP (GB)
(72) Inventor: Paulson, Kobus, Bromley, Kent BR1 2QA (GB); Hughes, Ian, Gwynedd, Gwynedd LL55 4AH (GB); Holland, Mark, Storrington, Sussex RH20 3HJ (GB)
(74) Representative: Barton, Russell Glen

(57) **Abstract**

A system for processing a financial transaction with an online merchant, the system comprising:
a payment service provider module configured for:
receiving a request to transfer funds from a customer account to an online merchant;
after receiving the request to transfer funds, allocating a portion of the funds to be paid to the online merchant to an escrow account to be used to fund payback requests;
after allocating the portion of the funds to be paid to the online merchant to an escrow account, storing the allocated portion of funds in the escrow account for the lesser of a predetermined period of time or until a payback request is received;.
reducing the portion of funds to be paid by the merchant into the escrow account after the merchant receives a reduced number of payback requests over a particular time period; and
increasing the portion of funds to be paid by the merchant into the escrow account after the merchant receives an increased number of payback requests over said particular time period.

## Description

### BACKGROUND OF THE INVENTION

In general, when a customer wishes to use a payment card (e. g., credit card or debit card) with a merchant (on the Internet or otherwise), the merchant sends an electronic authorization request to an acquiring bank. The acquiring bank passes the electronic authorization request to the issuing bank (i.e., the bank or financial institution that issued the payment card to the customer) via the card issuer network (e.g., Visa, MasterCard, American Express, or private card issuer network). The issuing bank verifies that the customer has sufficient credit available, is not delinquent with payments, and that all information (e.g., card number, card verification value number, and card holder details) that has been supplied is correct. The issuing bank then sends an electronic message authorizing the payment, via the card issuer network, to the acquiring bank, and the acquiring bank sends the electronic message to the merchant. The merchant accepts this authorization message as proof of future payment by the issuing bank. The actual transfer of the funds takes place at a later stage, referred to as the settlement process.

Payment card transactions that occur over the Internet or other networks involve risks not necessarily present in face-to-face payment transactions because the card holder and the merchant are not normally together when the transaction occurs. In addition, some e-commerce sectors, such as gambling and adult entertainment, raise additional public interest concerns that further highlight a need for a system for making payment card transactions secure and preventing fraud and other abuses.

### BRIEF SUMMARY OF VARIOUS EMBODIMENTS OF THE INVENTION

Various embodiments of the invention provide a more secure financial transaction system for e-commerce sectors that (1) more securely processes payment transactions, (2) helps to protect merchants and banks against fraudulent transactions, money laundering, and underage gambling, and (3) helps to limit other abuses in areas of e-commerce that are perceived to pose special risks, such as Internet gaming, travel, and consumer purchasing of electronic goods. To accomplish the above goals, various embodiments of the financial transaction system (1) establish operating and transaction processing protocols for merchants, Internet payment service providers, acquiring banks, and card schemes and (2) provide automated systems for monitoring and securely processing payment and financial transactions. Two or more of the various embodiments described herein may be combined to provide a system or method that meets one or more of these goals.

According to various embodiments of the invention, a system for processing a financial transaction with an online merchant is provided. The system includes a payment service provider module that is configured for: (1) receiving a request to transfer funds from a customer account to an online merchant; (2) in response to receiving the request to transfer funds, allocating at least a portion of the funds to be paid to the online merchant to an escrow account; and (3) in response to allocating a portion of the funds to be paid to the online merchant to an escrow account, storing the allocated portion of funds in the escrow account for the lesser of a predetermined period of time or until a request for a chargeback or refund request is received by the system. In addition, in one embodiment, the request may be received from a merchant computing device in communication with the payment services provider module over a network.

In one embodiment, the payment service provider module is further configured for periodically generating a reconciliation report for each online merchant that lists transfer requests that have been received and portions of funds that have been allocated to the escrow account. In other various embodiments, the payment service provider module is further configured for receiving a chargeback request or a refund request for funds previously transferred to the merchant from the customer account; and in response to receiving the chargeback request or the refund request, funding the chargeback request or the refund request from the funds stored in the escrow account.

In a further embodiment, the system also includes a fraud prevention module that is configured for applying one or more fraud filters to the request. The fraud filters may include: (1) comparing a first location associated with the customer account with a second location associated with a customer computing device used to transmit the request to the online merchant, and in response to the first location being outside of a first predetermined acceptable distance of the second location, marking the request as potentially fraudulent; (2) comparing a third location associated with a customer email address with the second location, and in response to the third location being outside of a second predetermined acceptable distance of the second location, marking the request as potentially fraudulent; (3) comparing a fourth location associated with a customer billing address for the customer account with the second location, and in response to the fourth location being outside of a third predetermined acceptable distance of the second location, marking the request as potentially fraudulent; (4) comparing a customer identification with a list of individuals prohibited from conducting financial transactions, and in response to the customer identification matching one of the individuals on the list, marking the request as potentially fraudulent; and/or (5) comparing an identification of a customer account with a list of accounts prohibited from conducting financial transactions, and in response to the identification of the customer account matching one of the accounts on the list, marking the request as potentially fraudulent.

According to various embodiments of the invention, a method of funding a payback request received from a customer is provided. The method includes the steps of: (1) establishing an escrow account for a merchant (e.g., an online merchant) that is funded by a percentage of funds to be paid to the merchant from one or more accounts associated with one or more customers; (2) receiving a payback request for a payment previously made to the merchant from an account associated with a particular customer; and (3) funding the payback request with funds stored in the escrow account. In one embodiment, the step of funding the payback request occurs without dispute. In addition, according to various embodiments, the payback request is a chargeback request or a refund request.

In addition, in a further embodiment, the method also includes the step of transferring a portion of the funds in the escrow account to the merchant in response to the portion of funds being stored in the escrow account for a particular time period (e.g., at least six months). In another embodiment, the method further includes the steps of (1) reducing the percentage of funds to be paid by the merchant into the escrow account in response to the merchant receiving a reduced number of payback requests over a particular time period; and (2) increasing the percentage of funds to be paid by the merchant into the escrow account in response to the merchant receiving an increased number of payback request over said particular time period. In yet another embodiment, the method includes the step of applying one or more fraud filters that are configured for identifying potentially fraudulent payback requests to the payback request. The fraud filters are executed by a fraud prevention module implemented on a computer readable medium according to one embodiment of the invention.

Various embodiments of the invention provide a method of funding a payback request to a customer that the steps of: (1) receiving a payback request for a payment previously made to the merchant with an account associated with a customer; and (2) funding the payback request to the customer with funds stored in an account associated with the merchant without dispute. The payback request may be a chargeback request or a refund request, according to various embodiments. In addition, the payback request may be received from a financial institution holding the account associated with the customer according to one embodiment, and the funds for the payback request may be paid to a financial institution holding the account associated with the customer.

According to various other embodiments of the invention, a fraud prevention system for identifying potentially fraudulent online financial transactions received from a customer for an online merchant is provided. The fraud prevention system includes a fraud prevention module that is configured for applying one or more of the fraud filters described above to each of one or more financial transactions received from one or more customers. In addition, in various embodiments, the fraud filters may also include: (1) comparing information associated with one or more subsequent financial transactions to the financial transactions stored in the fraud database, and in response to the customer account, customer identification, or customer billing address of each of the one or more subsequent financial transactions matching any of the financial transactions stored in the fraud database, marking the one or more subsequent financial transactions as potentially fraudulent; and (2) comparing the first location with the third location, and in response to the first location being outside of a first predetermined acceptable distance of the third location, marking the financial transaction as potentially fraudulent. In addition, in an embodiment in which the second location comprises a country, the fraud filters further include comparing the second location with a list of countries that are prohibited from conducting financial transactions with the merchant, and in response to the second location being on the list of countries, preventing the financial transaction from being conducted.

In another embodiment, the list of accounts prohibited from conducting financial transactions is a list of stolen accounts. In yet another embodiment, the first location is a location associated with a financial institution that manages the customer account. And, in another embodiment, the first location is a billing address associated with the customer account. According to various other embodiments, the first location, the second location, the third location, and the fourth location may be a country, a region, a state, a locality, a county, a city, or a postal district defined by one or more postal codes. Furthermore, in one embodiment, the list of individuals and/or the list of accounts may be published by a government authority.

In addition, in one embodiment of the invention, the fraud filters are selected based on the location of the merchant. In another embodiment of the invention, the fraud filters are selected based on the second location. And, in yet another embodiment of the invention, the fraud filters are selected based on the first location.

In another embodiment, the system further includes a payment service provider module that is configured for receiving a payback request for the customer, and the fraud prevention module is further configured for comparing an identity of the customer requesting the payback to a list of officers, directors, or owners associated with the online merchant. In response to the customer being on the list of directors, officers, or owners, the fraud prevention module marks the payback request as potentially fraudulent.

According to yet another embodiment of the invention, the financial transaction is a gambling payout request and the fraud prevention module is further configured for comparing an identification of an account named by the customer for receiving a payout from the merchant with an identification of an account used by the customer to place bets with the merchant. In response to the identification of the account named for receiving the payout not matching the identification of the account used to place bets with the merchant, the fraud prevention module marks the payout request as potentially fraudulent. In a further embodiment, the fraud prevention module is further configured for preventing a payout amount provided in the payout request from being transferred to the account named for receiving the payout. In another embodiment, the account named for receiving the payout request is associated with a first payment card and the account used to place bets with the merchant is associated with a second payment card, and the fraud prevention module is further configured for comparing the first payment card to the second payment card. In response to the first payment card not matching the second payment card, the fraud prevention module marks the payout request as potentially fraudulent.

According to various embodiments of the invention, a system for monitoring a compulsive spending behavior of a customer is provided. The system includes a processor and a memory, and the processor is configured for: (1) storing, in the memory, information associated with each of one or more requests from the customer to conduct financial transactions with a merchant, the information comprising an amount of funds; (2) receiving a new request comprising a new amount of funds to conduct a financial transaction with the merchant; (3) in response to receiving the new request, retrieving a total amount of funds stored in the memory; (4) comparing a sum of the total amount of funds and the amount of funds in the new request with a pre-determined acceptable limit; and (5) in response to the sum exceeding the pre-determined acceptable limit, notifying one or more of the customer, a payment source associated with the customer, or the merchant that the pre-determined acceptable limit has been exceeded. In a particular embodiment, the information stored in the memory further comprises a date on which each request was received by the merchant; and the processor is further configured for comparing the sum of the total amount of funds stored in the memory within a particular time period and the amount of funds in the new request with the pre-determined acceptable limit.

According to various other embodiments of the invention, another system for monitoring a compulsive gambling behavior of a customer is provided. The system is similar to the system described above, but the processor is further configured for retrieving the total amount of funds stored in the memory for the type of financial transaction in the new request and comparing a sum of the total amount of funds and the amount of funds in the new request with a pre-determined acceptable limit associated with the type of financial transaction in the new request. In various embodiments of the invention, the type of transaction may be a request to transfer funds to the merchant from an account associated with the customer or a request to place a bet using funds previously transferred to the merchant. In addition, in one embodiment, the requests and the new request are received by a computing device associated with the merchant from one or more computing devices associated with the customer over a network. In a particular embodiment in which the information stored in the memory includes a date on which the request was received by the merchant, the processor is further configured for comparing the sum of the total amount of funds requested by the customer within a particular time period and the amount of funds in the new request with the predetermined acceptable limit. In another embodiment, the processor is further configured for preventing the new request from being processed in response to the sum exceeding the pre-determined acceptable limit.

According to various embodiments of the invention, a third system for monitoring a compulsive spending behavior of a customer is provided that is similar to the first system described above, but the information associated with the requests includes a date on which the request was received by the merchant. The process of the third system is further configured for retrieving a total number of transactions stored in the memory within a particular time period, comparing the total number of transactions with a pre-determined acceptable limit, and in response to the total number of transactions exceeding the pre-determined acceptable limit, notifying one or more of the customer, a payment source associated with the customer, or the merchant that the limit has been exceeded.

Various embodiments of the invention provide a tax accounting system for financial transactions conducted with online merchants. The tax accounting system includes a memory and a processor, and the memory is configured for storing one or more types of tax and corresponding taxation rates for each of one or more tax jurisdictions. The processor is configured for: (1) receiving information associated with a financial transaction conducted with an online merchant from a customer; (2) in response to receiving the information associated with the financial transaction, identifying one or more tax jurisdictions associated with the financial transaction; (3) in response to identifying the one or more tax jurisdictions associated with the financial transaction, querying the memory to determine whether one or more types of tax are associated with the one or more tax jurisdictions; (4) in response to determining that one or more types of tax are associated with the one or more tax jurisdictions, applying the corresponding taxation rates for each of the one or more types of tax to the information associated with the financial transaction to determine an amount of tax owed; and (5) in response to determining the amount of tax owed, transferring the amount of tax owed to one or more relevant tax authorities. In various embodiments, the tax jurisdictions are associated with a location of the online merchant, a location of the customer, and/or a location of a computing device used by the customer to conduct the financial transaction.

In a further embodiment, the processor is further configured for transferring the amount to the one or more relevant tax authorities via electronic funds transfer. In another embodiment, the processor is further configured for storing the amount of tax owed and the amount transferred to the one or more relevant tax authorities in the memory with the financial transaction information for a particular period of time. In yet another embodiment, the processor is further configured for generating an accounting report for each of the one or more relevant tax authorities, the accounting report comprising the amount of taxes owed to the relevant tax authority, the amount of tax transferred to the relevant tax authority, and at least a portion of the information associated with the financial transaction for which taxes were paid to the relevant tax authority.

According to various other embodiments of the invention, a system for processing a financial transaction conducted with an online merchant is provided. The system includes a payment service provider module that is configured for: (1) receiving a request to transfer funds from a customer account to an online merchant, the request including a first location associated with the customer's address and a second location of a computing device that generated the request; (2) in response to receiving the request, comparing the first location, the second location, and a location of the online merchant with a list of locations that regulate the transfer of funds to the online merchant; (3) in response to the first location, the second location, or the location of the online merchant matching a location on the list of locations, determining whether one or more regulatory authorities regulate the transfer of funds from the customer account to the online merchant in the first location, the second location, or the location of the online merchant; and (4) in response to determining that the one or more regulatory authorities regulate the transfer of funds to the online merchant in the first location, the second location, or the location of the online merchant, notifying one or more of the customer, the merchant, or a bank associated with an account of the customer associated with the financial transaction of one or more types of regulations to which the transfer of funds is subject. The types of regulations include one or more of a prohibition of the transfer, a limitation on the transfer, or a tax on the transfer. In one embodiment, the second location is associated with an Internet protocol address issued to the computing device that generated the request.

According to various embodiments of the invention, a second system for processing a financial transaction conducted with an online merchant is provided. The system includes a payment service provider module that is configured for: (1) receiving a request to conduct a financial transaction (e.g., a request to place a gambling bet with the online merchant, a request to transfer funds to the online merchant, or a request for a payout resulting from one or more gambling bets placed with the online merchant) between a customer account and an online merchant, the request comprising a first location associated with the customer's address and a second location of a computing device that generated the request; (2) in response to receiving the request, comparing the first location, the second location, and the location of the merchant with a list of locations that regulate financial transactions conducted with the online merchant; (3) in response to the first location, the second location, or the location of the merchant matching a location on the list of locations, determining whether one or more regulatory authorities regulate financial transactions conducted with the online merchant in the first location, the second location, or the location of the online merchant; and (4) in response to determining that the one or more regulatory authorities regulate financial transactions in the first location, the second location, or the location of the merchant, notifying one or more of the customer, the merchant, or a bank associated with an account of the customer associated with the financial transaction of a type of regulation to which the financial transaction is subject.

In one embodiment, the payment services provider module is further configured for preventing the financial transaction from being conducted with the merchant in response to determining that the one or more regulatory authorities regulate financial transactions conducted with the online merchant in the first location, the second location, or the location of the online merchant. In addition, in a further embodiment, the payment services provider module is further configured for notifying one or more of the online merchant or the bank associated with the customer's account in response to determining that the one or more regulatory authorities regulate financial transactions conducted with the online merchant in the first location, the second location, or the location of the online merchant.

### BRIEF DESCRIPTION OF THE DRAWINGS

Having thus described various embodiments of the invention in general terms, reference will now be made to the accompanying drawings, which are not necessarily drawn to scale, and wherein:
FIG. 1 is a high-level block diagram of a financial transaction processing system in accordance with various embodiments of the present invention;
FIG. 2 is an illustration of various contractual relationships within the financial transaction processing system in accordance with various embodiments of the present invention;
FIG. 3A is a schematic diagram of a computing device according to one embodiment of the invention;
FIG. 3B is a schematic diagram of a computing device according to an alternative embodiment of the invention;
FIG. 4 is a schematic diagram illustrating the financial transaction processing system in accordance with various embodiments of the present invention;
FIG. 5 is a block diagram of a merchant module according to various embodiments of the present invention;
FIG. 6 is a block diagram of an IPSP module according to various embodiments of the present invention;
FIG. 7A is a block diagram of a fraud prevention sub-module according to various embodiments of the present invention;
FIG. 7B is a flow diagram of a fraud prevention sub-module according to various embodiments of the present invention;
FIG. 8 is a block diagram of an ASP module according to various embodiments of the present invention;
FIGS. 9A and 9B are flow diagrams of an authorization transaction process according to various embodiments of the present invention;
FIGS. 10A and 10B are flow diagrams of a settlement transaction process according to various embodiments of the present invention;
FIG. 11 is a flow diagram of a chargeback transaction process according to various embodiments of the present invention; and
FIG. 12 is a flow diagram of a customer payment transaction process according to various embodiments of the present invention.
FIG. 13 is a flow diagram of an authorization transaction request process according to one embodiment of the invention.
FIG. 14 is a flow diagram of a settlement transaction request process according to one embodiment of the invention.
FIG. 15 is a flow diagram of a process of monitoring compulsive spending behavior according to one embodiment of the invention.
FIG. 16 is a flow diagram of a process of monitoring compulsive gambling behavior according to one embodiment of the invention.
FIG. 17 is a flow diagram of a process of determining any taxes owed on a financial transaction according to one embodiment of the invention.
FIG. 18 is a flow diagram of a process of identifying financial transactions that are illegal or subject to regulation according to one embodiment of the invention.

### DETAILED DESCRIPTION OF VARIOUS EMBODIMENTS OF THE INVENTION

Various embodiments of the present invention now will be described more fully with reference to the accompanying drawings, in which some, but not all embodiments of the invention are shown. Indeed, this invention may be embodied in many different forms and should not be construed as limited to the embodiments set forth herein. Rather, these embodiments are provided so that this disclosure will satisfy applicable legal requirements. Like numbers refer to like elements throughout.

### Brief Overview

In general, various embodiments of the invention provide an improved financial transaction processing system for e-commerce sectors that (1) more securely processes payment transactions, (2) helps to protect merchants and banks against fraudulent transactions, money laundering, and underage gambling, and (3) helps to limit other abuses in areas of e-commerce that are perceived to pose special risks, such as Internet gaming, travel, and consumer purchasing of electronic goods. To accomplish the above goals, various embodiments of the financial transaction system (1) establish operating and processing protocols for merchants, Internet payment service providers, acquiring banks, and card schemes and (2) provide improved automated systems for monitoring and processing payment and related financial transactions.

For example, in various embodiments of the invention, a rolling reserve escrow account is set up for each merchant and funded in a manner that reduces the risk of loss to an acquiring bank or an issuing bank. For example, the risk of loss is reduced according to one embodiment by ensuring that sufficient funds are available for processing payback (e.g., chargeback and refund) requests received by the merchant. According to one embodiment, a certain percentage of the funds paid to the merchant is reserved and transferred to the escrow account for a certain period of time (e.g., 6 months, 1 year, or 3 years), and if the funds are not used during the time period, the funds are transferred back to the merchant. Because the money to fund the rolling reserve escrow account is taken out of the merchant's potential profits, using the merchant's business for money laundering schemes may be less attractive. In addition, according to various embodiments, the grounds on which a merchant can dispute chargeback requests are limited such that acceptable grounds for dispute do not substantially increase the risk of loss to the acquiring bank or the issuing banks (e.g., transactions that have been marked with a fraud flag). In another embodiment, the merchant may not be allowed to dispute chargeback requests on any grounds. Thus, according to various embodiments, the rolling reserve escrow account ensures a source of funds for processing payback requests, which decreases the risk of loss to customers and may increase the likelihood that customers will use engage in online financial transactions. Furthermore, when payback requests are funded by the merchant, the risk of loss for acquiring banks and issuing banks is decreased and may result in more favorable business terms for the merchant (e.g., lower transaction rates or lower chargeback rates).

As another example, in various embodiments of the invention, the participants in the financial transaction system require each other to be in compliance with the local regulatory authority. For example, in one embodiment, if a merchant is out of compliance, an Internet payment service provider (which is discussed in more detail below), acquiring banks, and card schemes may refuse to do business with the merchant. Alternatively, in one embodiment, the participants may fine the non-complying participant. Furthermore, customers may also refuse to do business with non-complying merchants. By establishing this protocol, the financial transaction system tends to provide a market incentive for participants to remain in compliance with the local regulatory authority.

Participants of the financial transaction system may include, according to various embodiments of the invention, online customers, online merchants, an Internet payment service provider (IPSP), an acquiring bank, issuing banks, or card schemes. The IPSP operates between the merchant and the acquiring bank to provide payment related services to the merchants and interface between the merchants and an acquiring bank over the network. In addition, the IPSP may contract with an accounting services provider (ASP) to provide accounting management services related to the payment services that the IPSP provides to the merchants.

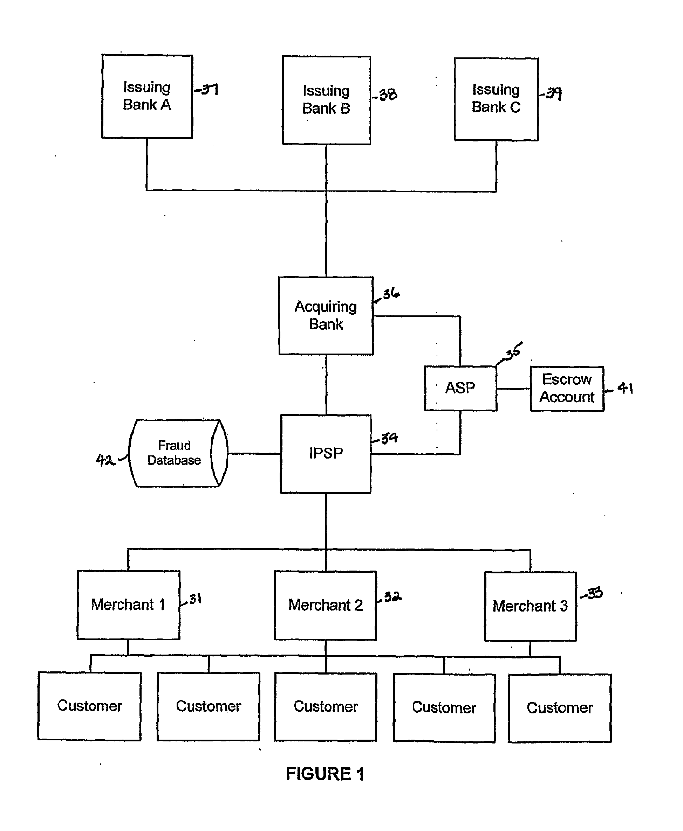

Figure 1 illustrates a high-level schematic diagram of how the various participants interface with each other according to various embodiments of the invention. For example, participants may exchange transaction information electronically over a network (e.g., the Internet, a private network, or a private LAN network). In particular, the transaction information may include an authorization request from the merchant to transfer money from the account associated with the customer's payment card to the merchant's account, an authorization message from the issuing bank authorizing the transfer of money from the customer's account to the merchant's account, a payback (e.g., chargeback or refund) request from the issuing bank requesting money be transferred from the merchant's account to the customer's account, and settlement requests for each merchant for all transactions processed during a particular time period (e.g., 24 hours, 48 hours, or a week).

Although the embodiments discussed above describe using a payment card (e.g., debit card, credit card, prepaid card, or proximity card) associated with an account to purchase goods and services from an online merchant, it will be understood that in various other embodiments, other types of payment modes can be used to make purchases. For example, alternative payment modes may include using payment tokens associated with an account (e.g., physical or electronic tokens) or using a number associated with an account (e.g., an account number and password for accessing the account). Other payment modes may involve authorizing payment by use of biometric data associated with an account, such as, for example, iris scans, finger print, and voice recognition. Payments may also be authorized by a combination of an account number and a one time password that may be supplied by a token or via telephone, email, or short message service ("SMS").

As discussed briefly above, the financial transaction system according to various embodiments provides (1) operating and processing protocols for participants and (2) automated monitoring and processing systems (e.g., computer software and/or hardware) that are adapted for processing financial transactions with a high level of security. These protocols and automated systems serve to protect customers and participants from fraudulent transactions and other abuses that may create risks in e-commerce transactions. Various examples of protocols that may be implemented by the system are described in detail below in Section A., and various embodiments of automated systems are described in Section B. below. Exemplary flows of various transactions that may be processed through the financial transaction system are described in more detail in Section C.

### A. Exemplary Protocols

Various embodiments of the financial transaction system provide operating and processing protocols for the participants. According to various embodiments, the protocols serve to deter organized crime and money laundering schemes using the merchant's business, reduce the risks of fraud and unauthorized transactions typically associated with online financial transactions and reduce the risk of loss to the acquiring bank and issuing banks, and increase the likelihood of compliance with government or local regulatory regulations. For example, according to various embodiments of the invention, the participants should be able to demonstrate compliance with the local or jurisdictional regulatory authority and should maintain auditable records of transactions processed for a particular time period (e.g., 2 years, 3 years, or 5 years). In addition, protocols may require each participant to demonstrate compliance with local regulatory requirements before entering into contracts with other participants, and protocols may require participants to verify periodically that the other participants are in good standing with the local regulatory authority. Various exemplary protocols that may be established for the merchant and IPSP are described below.

### Merchant

According to various embodiments of the invention, the merchant may be required to fully disclose the identity of company directors, officers, and beneficial shareholders and report any changes to the IPSP. Requiring that this list be provided and comparing the list to a list of people and entities suspected to be involved with organized crime may help deter organized crime rings from using the merchant's business for money laundering or other illegal purposes.

In addition, according to various embodiments of the invention, the merchant may be required to take one or more steps that help to reduce the risk of loss from fraudulent transactions to the acquiring banks, issuing banks, and customers. For example, according to various embodiments, the merchants may be required to (1) demonstrate compliance with all relevant regulatory requirements, (2) pay a penalty payment when any contractual obligations are breached, (3) use address verification, age verification, and identity verification software on the merchant's computing device to verify payment information and customer information provided during online transactions, (4) perform an initial fraud check on payment and customer information received and perform random or periodic checks thereafter, or (5) provide notice to a customer that is accessing the system using an IP address or that provides a billing address that is associated with a jurisdiction in which the transaction is considered illegal.

Furthermore, according to various embodiments, the merchant may be required to implement protocols that mitigate the risk of abuse associated with the merchant's business, if any, or the perceived social impact of conducting business with the merchant (e.g., compulsive spending if the merchant is an online gaming merchant or an adult entertainment provider). For example, the merchant may be required to provide advice and help resources regarding the social impact of its business (e.g., a toll free telephone number for a help line, a website that offers helpful information, or contact information for a counselor). Furthermore, according to one embodiment, the merchant may be required to provide the merchant's name and a free telephone number on the customer's payment card statement for customers to call customer service and query about the transaction. A customer service representative should be available 24/7, according to various embodiments of the invention.

### IPSP

According to various embodiments of the invention, the IPSP may be required to implement one or more of the following security features to help deter organized crime rings or others from using the merchants business for money laundering purposes and to reduce the risks associated with online financial transactions for the various participants: (1) setting up a rolling reserve escrow account, such as the escrow account discussed above, for each merchant from which it will process payback requests, (2) monitoring transactions to identify suspicious activity, (3) monitoring the frequency and value of transactions on a per payment card basis, (4) keeping transactions for each merchant (or website) in separate streams for tracking and auditing purposes, (5) saving transaction information periodically (e.g., every 2 seconds or every 10 seconds) to create an audit trial and storing the transaction information for a particular time period (e.g., 1 year, 2 years, or 5 years), (6) verifying the identify of card holders, (7) requiring merchants to disclose company directors and beneficial shareholders to the IPSP, (8) limiting the payment of winnings from Internet gambling merchants to the card holder and screening names of payees against applicable sanction lists (e.g., "Specially Designated Nationals list" in the U.S.), (9) requiring merchants to be licensed under applicable local laws and regulations and remain in good financial and legal standing, (10) penalizing merchants that are found to be in breach of the contractual obligations (e.g., by terminating the contract with the merchant or fining the merchant), (11) using several Tier 1 acquiring banks operating in well-regulated jurisdictions and be certified by them, (12) requiring merchants to implement policies, procedures, and standards aimed at keeping cardholder information secured (e.g., being certified by VISA's Account Information Security ("AIS") program), and (13) operating and applying recommendations of the Financial Action Task Force on Money Laundering (e.g., www.FATF-GAFI.org) (see, for example, "Anti-Money Laundering/Combating Terrorist Financing Methodology (with FATF 40+9 incorporated)" promulgated by the International Monetary Fund), attached as Appendix A). In addition, in various embodiments, the IPSP maintains a fraud database 42, shown in Figure 1, for storing information on transactions processed by the IPSP that appear to be or were determined to be fraudulent. The IPSP, according to one embodiment, allows other participants to utilize the fraud database when processing transactions, further reducing the risk of loss to issuing banks, acquiring banks, merchants, and customers. Although the IPSP may manage its own accounting and the fraud database, reconcile transactions it processes, and generate reconciliation reports for the merchants, the IPSP, according to another embodiment, may contract with an ASP to provide one or more of these services.

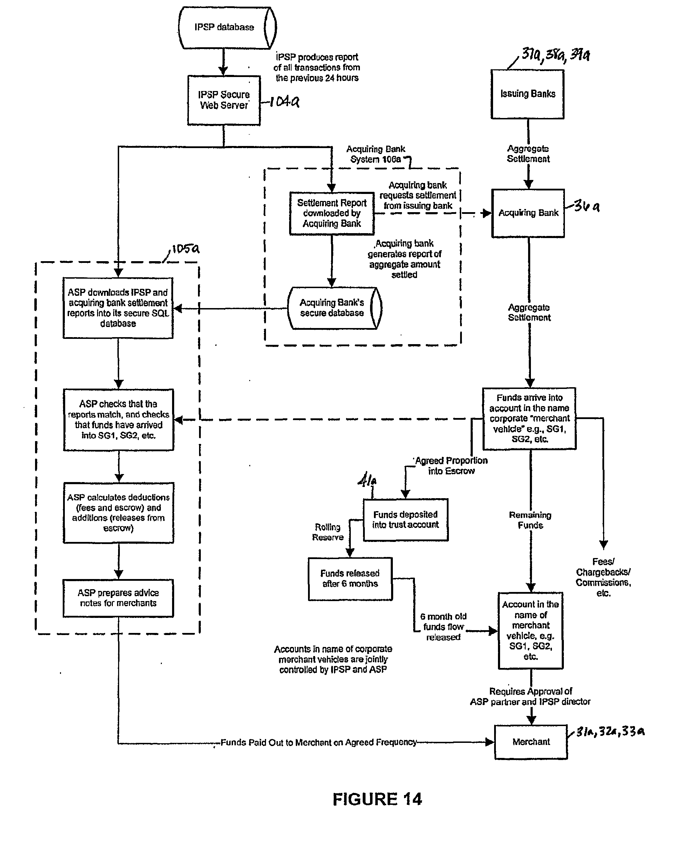

In addition, exemplary protocols according to one embodiment of the invention may require that the IPSP create separate corporate entities (e.g., SG1, SG2, SG3, etc.) for each merchant, and that these corporate entities operate under the direction of the IPSP and/or ASP to manage the funds received for the particular merchant associated with the corporate entity, which is discussed in more detail in relation to Figure 14. According to various embodiments, this corporate structure isolates the operation of each merchant. In addition, according to various embodiments, this corporate structure provides a legal structure that ensures fair and objective control of the escrow funds being held for the protection of the financial transaction system and the customer.

### Acquiring Banks

According to various embodiments of the invention, exemplary protocols may require the acquiring banks to implement one or more of the following security features to reduce the risks associated with online transactions to the issuing banks and the customers: (1) monitor the credit activity of online merchants to ensure that customers are able to receive winnings or credits from merchants onto their payment cards (e.g., the cardholder funds transfer (CFT) pilot sponsored by VISA and the Money Flow pilot sponsored by MasterCard), (2) ensure all card scheme regulations are communicated to the IPSP and merchants, (3) ensure that transaction information has correct data elements as dictated by the card schemes and issuing banks, and (4) ensure the IPSP is in compliance with the applicable regulatory schemes.

### Agreements between Participants

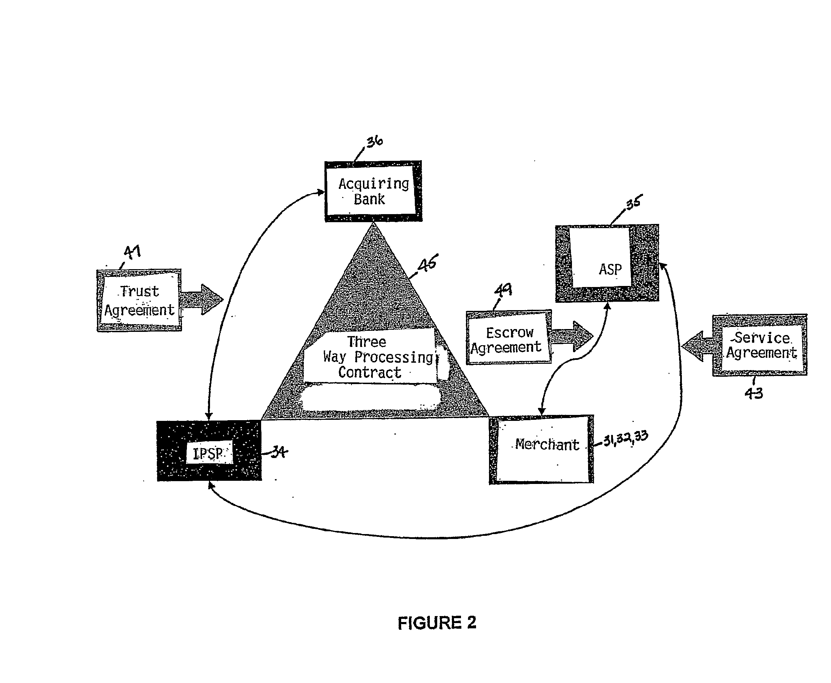

According to various embodiments of the invention, one or more system protocols may be incorporated into agreements between the participants to ensure compliance with the established protocols. For example, Figure 2 illustrates a schematic diagram of contractual relationships among the participants according to various embodiments of the invention. In particular, the acquiring bank **36**, the IPSP **34**, and each merchant **31, 32, 33** may enter into a three-way processing contract **45** that sets forth the obligations of each party with respect to how transactions are processed. This agreement **45** may require each party to remain in good standing with the local regulatory authority, provide an updated list of officers, directors, and beneficial shareholders to the other parties, perform certain identity verification and fraud checks on transaction information, and store transaction information for a particular time period (e.g., for **1** year, **3** years, **5** years) for auditing purposes. In addition, according to one embodiment, the agreement **45** may include one or more grounds on which the merchant may dispute a chargeback request. According to another embodiment, the agreement **45** may establish a fee chargeable to the merchants **31, 32, 33** for chargebacks.

In addition, the acquiring bank **36** and the IPSP **34** may enter into a trust agreement **47** that sets forth the particular fraud checks that the IPSP should perform on transaction data and when the IPSP should request settlement on behalf of each merchant (e.g., daily or weekly).

The ASP **35** and each merchant **31, 32, 33** may enter into an escrow agreement **49** that sets forth how the ASP will manage the rolling reserve escrow account on behalf of the merchant (e.g., the percentage of funds to be taken out for the escrow account, the length of time the funds are stored in the escrow account, or the format of reconciliation reports).

Furthermore, the ASP **35** and the IPSP **34** may enter into a service agreement **43** that sets forth the obligations of each party with respect to the accounting services provided by the ASP to the IPSP (e.g., the formats of and accessibility of data exchanged between the ASP and IPSP, the types and formats of summary reports generated by the ASP for or on behalf of the IPSP **34**, the calculation of fees payable to one or more participants, or the approval procedures for approving reconciliation reports for the merchants). In addition, in one embodiment, the ASP **35** may be required by the agreement **43** to respond to queries from merchants **31, 32, 33** about transactions processed by the IPSP **34** or on behalf of the IPSP **34** by the ASP **35**. Furthermore, in another embodiment, the ASP **34** may be required to (a) identify all transaction data processed by the ASP **35** on behalf of the IPSP **34** that is related to chargeback requests and (b) forward the identified data to the merchant **31, 32, 33** to ascertain what, if any, further actions the merchant **31, 32, 33** wishes to take with respect to the chargeback request.

### B. Automated Systems for Monitoring and Processing Transactions

As will be appreciated by one skilled in the art, the present invention may be embodied as a method, a transaction processing system, or a computer program product. Accordingly, the present invention may take the form of an entirely hardware embodiment, an entirely software embodiment, or an embodiment combining software and hardware aspects. Furthermore, the present invention may take the form of a computer program product on a computer-readable storage medium having computer-readable program instructions (e.g., computer software) embodied in the storage medium. More particularly, the present invention may take the form of web-implemented computer software. Any suitable computer-readable storage medium may be utilized including hard disks, CD-ROMs, optical storage devices, or magnetic storage devices.

The present invention is described below with reference to block diagrams and flowchart illustrations of methods, apparatuses (i.e., systems) and computer program products according to an embodiment of the invention. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions executed on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

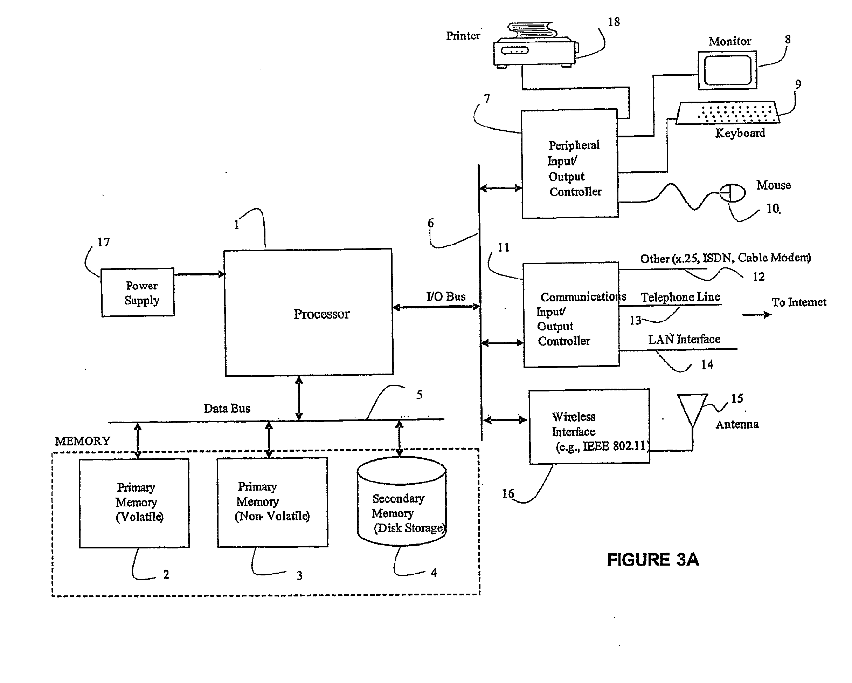

In the various embodiments described herein, a "computer" or "computing device" may be referenced. Such computer may be, for example, a mainframe, desktop, notebook or laptop, a hand held device such as a data acquisition and storage device, or it may be a processing device embodied within another apparatus such as, for example, a wireless telephone. In some instances the computer may be a "dumb" terminal used to access data or processors over a network. Turning to Figure 3A, one embodiment of a computing device is illustrated that can be used to practice aspects of various embodiments of the invention. In Figure 3A, a processor **1**, such as a microprocessor, is used to execute software instructions for carrying out the defined steps. The processor receives power from a power supply **17** that also provides power to the other components as necessary. The processor **1** communicates using a data bus **5** that is typically 16 or 32 bits wide (e.g., in parallel). The data bus **5** is used to convey data and program instructions, typically, between the processor and memory. In various embodiments, memory can be considered primary memory **2** that is RAM or other forms which retain the contents only during operation, or it may be nonvolatile **3**, such as ROM, EPROM, EEPROM, FLASH, or other types of memory that retain the memory contents at all times. The memory could also be secondary memory **4**, such as disk storage, that stores large amount of data. In some embodiments, the disk storage may communicate with the processor using an I/O bus **6** instead or a dedicated bus (not shown). The secondary memory may be a floppy disk, hard disk, compact disk, DVD, or any other type of mass storage type known to those skilled in the computer arts.

The processor **1** also communicates with various peripherals or external devices using an I/O bus **6**. In various embodiments, a peripheral I/O controller **7** is used to provide standard interfaces, such as RS-232, RS422, DIN, USB, or other interfaces as appropriate to interface various input/output devices. Typical input/output devices include local printers **18**, a monitor **8**, a keyboard **9**, and a mouse **10** or other typical pointing devices (e.g., rollerball, trackpad, joystick, etc.).

The processor **1** typically also communicates using a communications I/O controller **11** with external communication networks, and may use a variety of interfaces such as data communication oriented protocols **12** such as X.25, ISDN, DSL, cable modems, etc. The communications controller **11** may also incorporate a modem (not shown) for interfacing and communicating with a standard telephone line **13**. Finally, the communications I/O controller may incorporate an Ethernet interface **14** for communicating over a LAN. Any of these interfaces may be used to access a wide area network such as the Internet, intranets, LANs, or other data communication facilities.

Furthermore, the processor **1** may communicate with a wireless interface **16** that is operatively connected to an antenna **15** for communicating wirelessly with another device, using for example, one of the IEEE 802.11 protocols, 802.15.4 protocol, or a standard 3G wireless telecommunications protocols, such as CDMA2000 1x EV-DO, GPRS, W-CDMA, or other protocol.

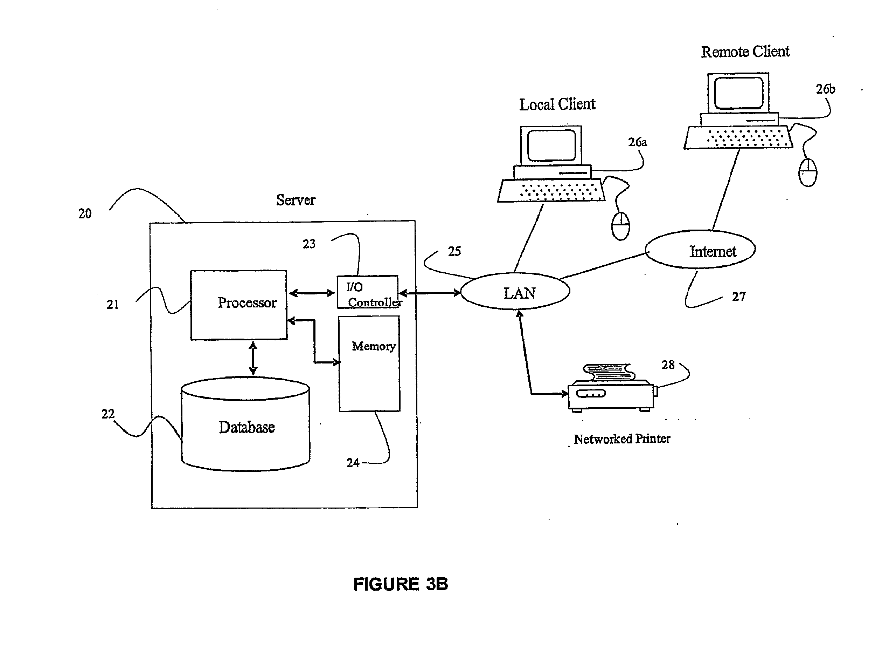

An alternative embodiment of a processing system that may be used is shown in Figure 3B. In this embodiment, a distributed communication and processing architecture is shown involving a server **20** communicating with either a local client computer **26a** or a remote client computer **26b.** The server **20** typically comprises a processor **21** that communicates with a database **22** (e.g., a SQL database), which can be viewed as a form of secondary memory, as well as primary memory **24**. The processor also communicates with external devices using an I/O controller **23** that typically interfaces with a LAN **25**. The LAN may provide local connectivity to a networked printer **28** and the local client computer **26a**. These may be located in the same facility as the server, though not necessarily in the same room. Communication with remote devices typically is accomplished by routing data from the LAN **25** over a communications facility to a wide area network **27,** such as the Internet. A remote client computer **26b** may execute a web browser, allowing the remote client **26b** to interact with the server as needed by transmitting data through the wide area network **27**, over the LAN **25**, and to the server **20.** In addition, the web browser may include a user interface developed in Java Script and Microsoft.net for example.

Those skilled in the art of data networking will realize that many other alternatives and architectures are possible and can be used to practice various embodiments of the invention. The embodiments illustrated in Figure 3A and 3B can be modified in different ways and be within the scope of the invention.

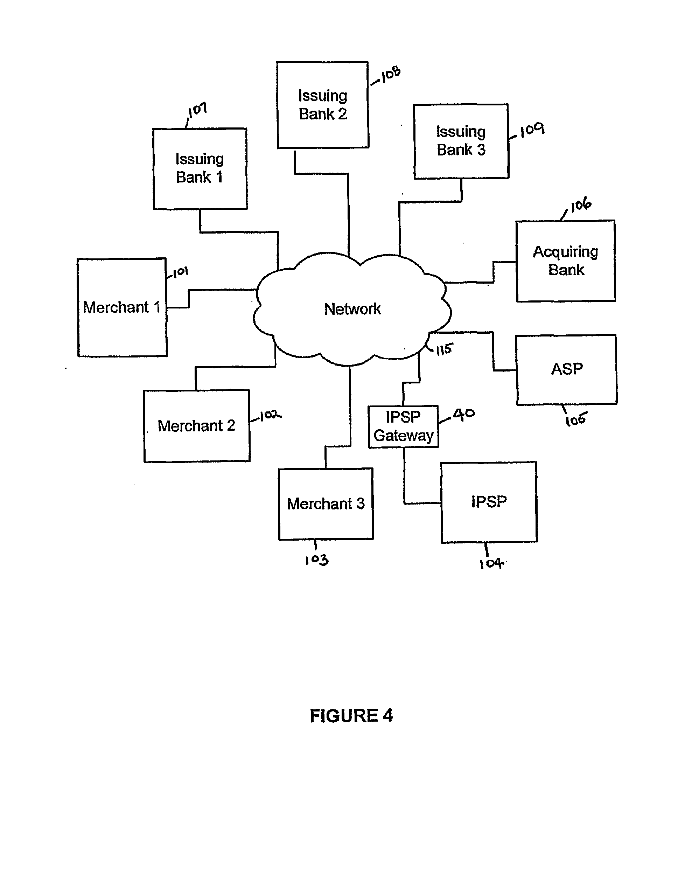

Figure 4 illustrates computing devices **101-109** that are associated with each participant and that are in communication with each other via one or more networks **115** (e.g., private networks, private LAN networks, or the Internet) according to various embodiments of the invention. For example, according to one embodiment, the IPSP **34** may establish an IPSP network that is accessible to merchants **31, 32, 33** and the acquiring bank **36** through IPSP gateways **40** that connect the IPSP network to the networks utilized by the merchants **31, 32, 33** and acquiring banks **36**. According to various embodiments, the IPSP gateways **40** may be implemented completely as hardware, completely as software, or as a combination of both. In one embodiment, IPSP gateways **40** ensure the security of the information being transmitted to and from the IPSP **34** by selectively allowing access to the IPSP network. For example, merchants **31, 32, 33** or acquiring banks **36** that do not have a contractual relationship with the IPSP **34** may be denied access to the IPSP network by the IPSP gateways **40**.

In addition, the acquiring banks **36** may utilize card scheme networks to exchange information with the issuing banks **37, 38, 39** according to various embodiments of the invention. Examples of card scheme networks include, but are not limited to, the VISA, MasterCard, and American Express networks.

As discussed above in relation to Figures 3A and 3B, according to various embodiments, the merchants **31, 32, 33**, IPSP **34,** ASP **35**, acquiring bank **36**, and issuing banks **37, 38, 39** may be associated with one or more computing devices (e.g., one or more servers, SQL servers, or web servers) and one or more of these computing devices may include an automated system for processing financial transactions. For example, the system **100** provides a merchant module **200** configured to operate on the merchants' systems **101, 102, 103**, an IPSP module **300** configured to operate on the IPSP's system **104**, and an ASP module **400** configured to operate on the ASP's system **105**. These modules **200, 300, 400** automate processing functions for each participant, according to one embodiment. These modules may be implemented completely as hardware, completely as software, or as a combination of both.

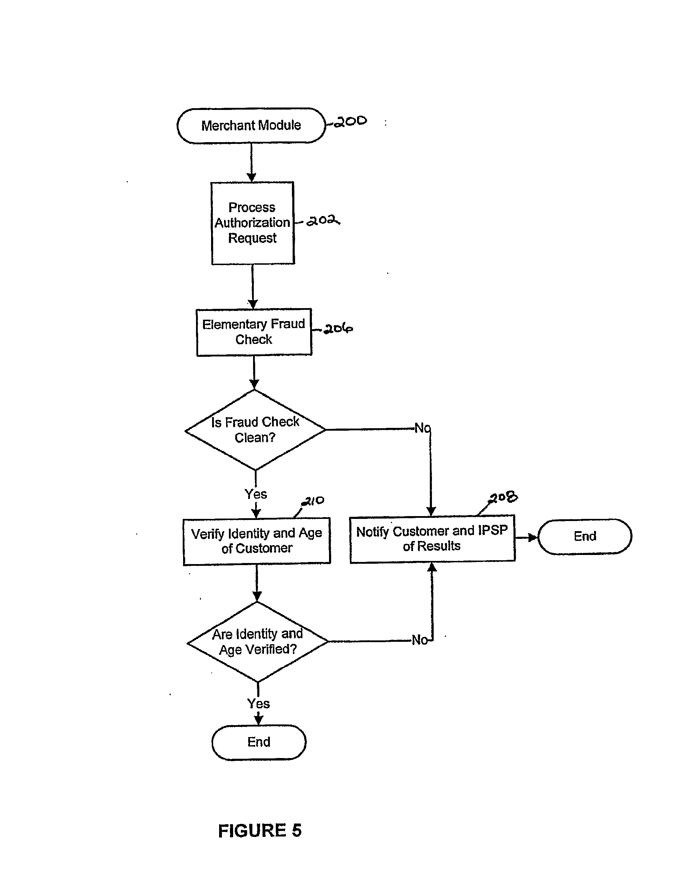

In addition, according to one embodiment, the ASP module **400** may be configured to operate on an ASP system **105** if the IPSP **34** contracts with an ASP **35** to provide accounting related services, or, in another embodiment, the ASP module **400** may be configured to operate on the IPSP's system **104**. Various embodiments of these modules are described in more detail below in relation to Figures 5-8.

### Merchant Module

Figure 5 illustrates a block diagram of a merchant module **200** according to various embodiments of the invention. According to various embodiments, the merchant module **200** operates on the merchant system **101, 102, 103** and automates at least a portion of the steps that a merchant performs to process transactions. For example, the merchant module **200** is configured to process authorization requests, which is shown as step **202**. In step **202**, the merchant module **200** receives payment information from a customer, which may include some or all of the customer's full name and billing address, email address, credit card number, CVV2 number, payment amount, or card issuer name. The merchant module **200** then verifies the format of the payment information received, such as verifying whether the credit card number is a valid number and whether all fields have been completed. The merchant module **200** may further be configured to compare the customer information with previously stored identifications and passwords associated with 3-D secure software plug ins (e.g., Verified by Visa and SecureCode by MasterCard). If the format is correct, the merchant module **200** generates and transmits an authorization request to the IPSP system **104** for further processing.

According to various embodiments of the invention, the merchant module **200** is also configured to perform an elementary fraud check on transaction requests received, shown as step **206**. The elementary fraud check step **206** may include comparing the credit card number with a list of stolen credit card numbers, verifying that the billing address provided by the customer matches the billing address for the payment card, comparing the billing address provided with a billing address that is provided when the customer initially registers with the merchant, or verifying that the card issuer name matches the banking identification number (BIN) for the card, for example. In addition, the fraud check step **206** may be performed after the authorization request is transmitted to the IPSP (step **202**), as shown in Figure 5, or prior to generating and transmitting the authorization request (not shown). In one embodiment, the fraud check step **206** is performed after the authorization request has been transmitted (step **202**) but prior to settlement with the issuing bank.

If no potential problems are detected in the fraud check step **206**, the merchant module **200** verifies the age and identity of the customer, shown as step **210**. For example, the age may be verified by checking government records for the cardholder, such as voter registration records or driver's license records, or by establishing a network connection with an electronic age and/or identity verification service (e.g., the "URU" service provided by the UK based GB Group) and providing the customer's information to the service. The service, according to various embodiments, compares the customer's information to government or other public records to verify the customer's identity and age. In one embodiment, the merchant module **200** may perform the age and identity verification step **210** when a customer is setting up a new account with the merchant. The process of step **210** may be repeated periodically or randomly thereafter to re-verify the identity and age of existing customers. In addition, in the embodiment shown in Figure 5, the age and identity verification step **210** is shown as occurring after the fraud check step **206** and the authorization request step **202**. However, in other embodiments, the age and identity verification step **210** can occur prior to the authorization request step **202** or the fraud check step **206**.

If the customer's age and identity are not verified in the age and identity verification step **210** or if the fraud check step **206** detects a potential problem for the transaction, the merchant module **200** may notify the customer that the transaction is denied and the IPSP that the transaction should be denied, shown as step **208**, according to one embodiment.

In addition, the merchant module **200** according to various embodiments is configured to display or otherwise notify the customer of the amount of time spent on the merchant's website for a particular time period (e.g., per session, 24 hours, or week). Having this information may assist customers in avoiding compulsive behavior with respect to the merchant's website. Furthermore, the merchant module **200** may be configured to allow customers to access the transaction log for the customer maintained by the merchant. In addition, the merchant module **200** may be configured to implement self-regulation guidelines, such as, for example, limits on losses (e.g., gambling transactions), or the time and/or amount or money spent on the merchant's website.

To protect against money laundering, the merchant module **200** may be further configured to execute anti-money laundering software (e.g., software that compares available data to the parameters set forth in the "Anti-Money Laundering/Combating Terrorist Financing Methodology (with FATF 40+9 incorporated)" promulgated by the International Monetary Fund), attached as Appendix A) to evaluate any transaction over a selected amount (e.g., €15,000 or $20,000). The evaluation by the software may include identity verification and reverification, followed by checks against the verified individual or company.

### IPSP Module

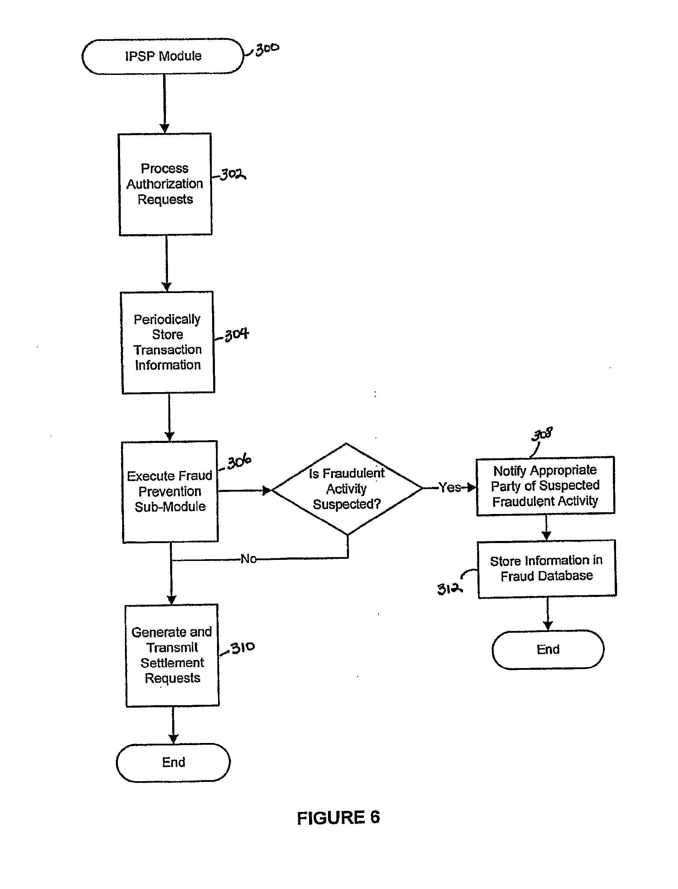

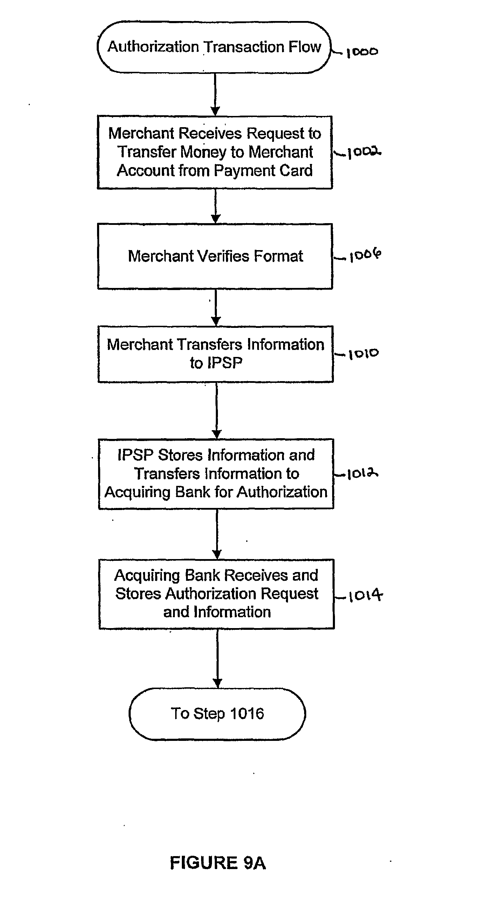

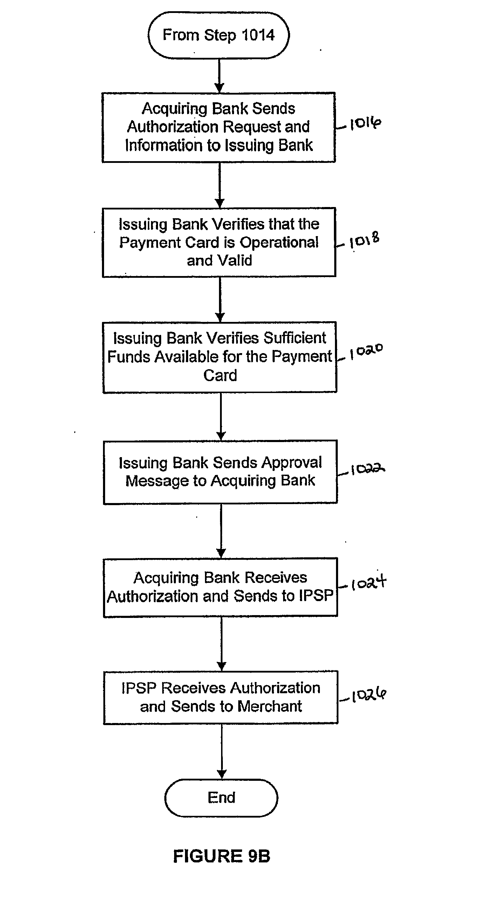

Figure 6 illustrates a flow diagram of an IPSP module **300** according to various embodiments of the invention. According to one embodiment, the IPSP module **300** is configured to operate on the IPSP system **104**. Beginning at step **302**, according to one embodiment, the IPSP module **300** processes authorization requests received from the merchant system **101, 102, 103.** Each authorization request may include payment information for a particular transaction and the customer information associated with the transaction, such as the full name of the customer, the customer's email address, and the IP address of the computing device used by the customer to initiate the transaction. According to various embodiments of the invention, the IPSP module **300** then transmits the authorization request to the acquiring bank system **106**, which transmits the authorization request to the appropriate issuing bank system **107, 108, 109**. As discussed below in more detail in relation to Figures 9A and 9B, according to various embodiments, the IPSP module **300** receives an authorization message from the issuing bank system **107, 108, 109**, via the acquiring bank system **106**, authorizing or denying the transaction, and the IPSP module **300** transmits the authorization message to the merchant system **101,102,103.**

According to various embodiments, in step **304**, the IPSP module **300** stores transaction information (e.g., authorization requests, chargeback requests, refund requests, and settlement requests) processed by the IPSP module **300**. The stored transaction information may be used for auditing purposes, monitoring the type and frequency of transactions on a per customer, per payment card, or per merchant basis, and generating settlement requests and allocating payment of funds received in response to settlement requests. For example, authorization, chargeback, and refund requests may be stored periodically, such as, for example, every second or every ten seconds, or on a per transaction basis, such as each time the IPSP module **300** receives and processes transaction information. These requests may be stored for a certain period of time (e.g., a day or a week or longer). In addition, according to various embodiments, the requests may be stored on a per merchant basis (or on a per URL (Uniform Resource Locator) if a merchant has more than one website supporting e-commerce transactions). The IPSP module **300** groups the authorization requests for each merchant into a settlement request file for each merchant periodically (e.g., daily or weekly) and transmits the settlement requests for the merchants in a batch file to the acquiring bank system **106** for settlement, which is discussed below in relation to step **310**. The IPSP module **300** may store the grouped transaction information as a separate file for a certain period of time (e.g., a year, two years, or three years).

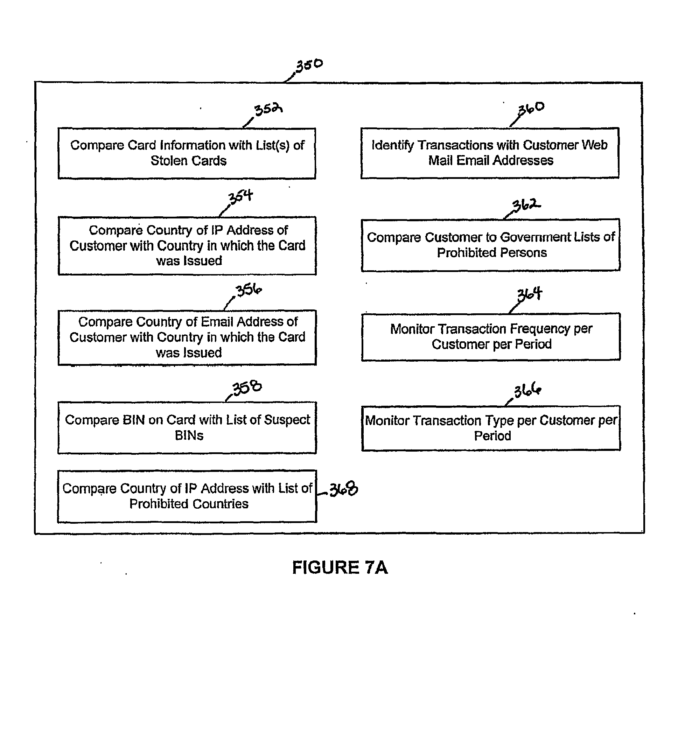

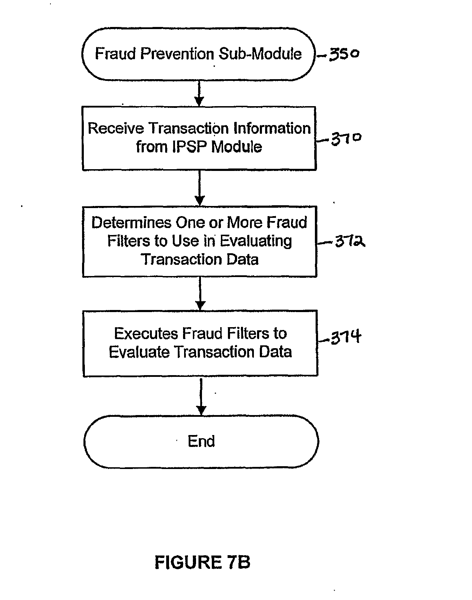

In various embodiments of the invention, the IPSP module **300** is also configured to execute a fraud prevention sub-module **350**, which is shown as step **306** in Figure 6 and discussed below in more detail in relation to Figures 7A and 7B, to verify that the transaction should be subject to settlement by the system **100**. For example, if the payment card number is listed on a list of stolen payment card numbers, the country of the IP address of the customer does not match the country in which the payment card was issued, or the customer is on a national sanctions list (e.g., "Specially Designated Nationals list" in the U.S.), the IPSP module **300** will not present the transaction for settlement. In the embodiment shown in Figure 6, the execution of the fraud prevention sub-module **350** is shown as occurring after the authorization request processing step **302** and the transaction information storage step **304**. However, step **306** may be performed by the IPSP module **300** prior to transmitting authorization requests to the acquiring bank system **106** in step **302** or prior to storing the transaction information in step **304**, according to other embodiments of the invention.

According to various embodiments of the invention, if the fraud prevention sub-module **350** detects potentially fraudulent activity for a transaction in step **306**, the IPSP module **300** is configured to notify the appropriate party or parties of the suspected fraudulent activity, which is shown as step **308**. The appropriate party according to various embodiments may include the acquiring bank **36** (which may pass the notification on to the issuing bank), the issuing bank **37**, **38**, **39** (directly), the merchant **31**, **32**, **33**, and/or the customer. In addition, the IPSP module **300** is configured, according to various embodiments, to store information about potentially fraudulent transactions in a fraud database **42**, shown as step **312**. The fraud database **42** may be utilized by the IPSP module **300** to analyze subsequent transactions. In addition, in one embodiment, the fraud database **42** may be accessible to the card issuer networks and/or acquiring banks to analyze transactions received. Furthermore, the fraud database **42** may include one or more of the following fields: customer name, address, IP address, payment information (e.g., card or account number), phone number, and a code or description identifying prior fraudulent activity.

As shown in step **310**, if the fraud prevention sub-module **350** does not detect any potentially fraudulent activity in step **306**, the IPSP module **300**, according to various embodiments, is configured to generate and transmit settlement requests to the acquiring bank system **106** or the issuing bank system **107,108,109.** The settlement requests are based on the authorization, chargeback, and refund requests received by the IPSP module **300** within a particular time period (e.g., a day or a week). The settlement requests may include only those transactions that have not been detected as potentially fraudulent by the IPSP module **300** and the merchant module **200**, according to one embodiment. Alternatively, the settlement requests may include one or more transactions that have been detected as potentially fraudulent by the IPSP module **300** or the merchant module **200**, but are marked or flagged as being potentially fraudulent in the settlement request.

As mentioned above, the IPSP module **300** executes the fraud prevention sub-module **350** in step **306.** An exemplary fraud prevention sub-module **350** according to various embodiments of the invention is shown in Figures 7A and 7B. As shown in Figure 7A, the fraud prevention sub-module **350** performs various steps, referred to herein as "fraud filters", to detect potentially fraudulent transaction activity and may be configured to block or flag a transaction depending on the result of a particular fraud filter or a combination of results from a group of fraud filters. Steps **352-368** show several fraud filters that may be performed by the fraud prevention sub-module **350** according to various embodiments of the invention. Figure 7B illustrates steps executed by the fraud prevention sub-module **350** to determine which fraud filters to apply to the transaction information, according to various embodiments of the invention.

For example, as shown in step **352** in Figure 7A, the fraud prevention sub-module **350** may compare the payment card information with a list identifying stolen payment cards. In addition, as shown in step **354**, the fraud prevention sub-module **350** may compare a location associated with a financial institution that issued the payment card with a location associated with the IP address associated with the customer's computing device. The IP address associated with the customer's computing device may be obtained by the merchant module **200** (e.g., by using IP address detection software integrated into the merchant module **200**) when the transaction information is initially received by the merchant system **101**, **102, 103.** In addition, the fraud prevention sub-module **350** may be configured to compare the location associated with the IP address of the customer's computing device with the customer's billing address to ensure the location of the customer's computing device is within a particular radius of the billing address (e.g., 50 miles). Similarly, the fraud prevention sub-module **350** may compare the location associated with the financial institution that issued the payment card with a location associated with the email address provided by the customer, as shown in step **356**, or compare the location of the IP address of the customer's computing device with the location associated with the email address provided by the customer, as shown as step **357**. The locations compared above may include one or more of a country, a region, a state, a locality, a county, a city, or a postal district defined by one or more postal codes (e.g., zip codes).

In addition, as shown in step **358**, the fraud prevention sub-module **350** may compare the banking identification number (BIN) of the payment card to a list of suspicious BINs, and in step **360**, the fraud prevention sub-module **350** may identify and flag transactions initiated by customers having web mail email addresses (e.g., HOTMAIL or YAHOO email addresses). Furthermore, as shown in step **362**, the fraud prevention sub-module **350** may compare the customer's information to a government-compiled list of persons that are prohibited from engaging in financial transactions with merchants within the government's jurisdiction. If the customer is identified on lists of persons, groups and entities subject to financial sanctions published by the jurisdiction, such as the "Specially Designated Nationals list" published by the U.S., the transaction may be denied. Similarly, as shown as step **368**, the fraud prevention sub-module **350** may compare a country associated with the IP address of the customer's computing device with a list of countries that are prohibited from doing business with merchants in a particular jurisdiction, and if the country of the IP address is on the list, the transaction may be denied. In addition, as shown in step **367**, the fraud prevention sub-module **350** may compare a customer's information with a list of officers, directors, or owners of the online merchant, and if the customer is on the list, the transaction may be flagged as being potentially fraudulent or denied.

According to various embodiments, the fraud prevention sub-module **350** may further be configured to monitor the frequency of transactions for each customer or each card for a particular time period (e.g., a month, a year), as shown in step **364**. In addition, as shown in step **366**, the fraud prevention sub-module **350** may be configured to monitor the type of transactions (e.g., gambling transactions, travel transactions, adult entertainment transactions) for each customer or card during a particular time period. By monitoring the frequency and type of transactions on a per card or per customer basis, the fraud prevention sub-module **350**, according to various embodiments of the invention, can (1) identify potentially fraudulent use of a card if the pattern of its use changes dramatically and (2) identify potential addictions or abuses if the customer engages in a particular type of transaction more frequently or too frequently. The monitoring steps **364** and **366** may be accomplished, according to one embodiment, by establishing a range of frequency and/or types of transactions based on the customer's prior transactions and comparing future transactions to the established range. According to other embodiments, the ranges used by the fraud prevention sub-module **350** may be published by local governments or regulatory authorities, result from academic or institutional research or the like, or may be established by one or more of the participants.

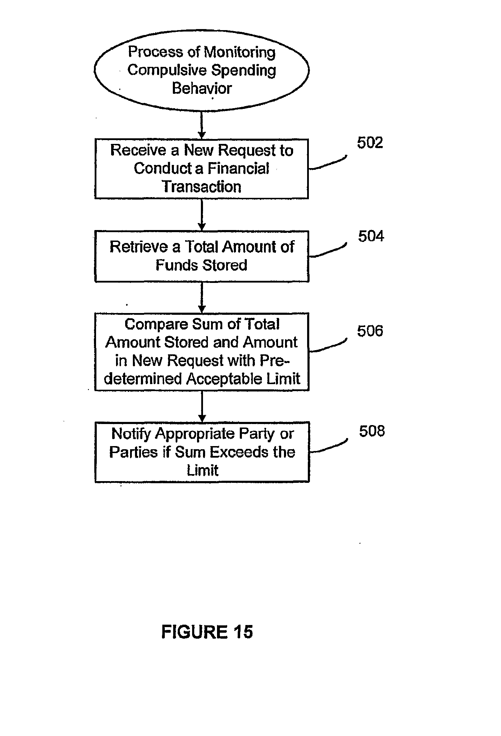

Figure 15 illustrates a process of monitoring compulsive spending behavior according to various embodiments of the invention. In particular, beginning at step 502, a new request for a financial transaction is received by the IPSP module **300**, In response to receiving the new request, the IPSP module **300** retrieves a total amount of funds that have been stored in the memory **24** associated with previously requested financial transactions between the particular merchant **31, 32, 33** and customer, shown as step **504**. In step **506**, a sum of the total amount of funds retrieved and the amount of funds in the new request are compared with a pre-determined acceptable limit of funds to be spent with the merchant **31, 32, 33**. If the sum exceeds the pre-determined acceptable limit, the IPSP module **300** notifies the appropriate party or parties (e.g., customer, the issuing bank, and/or the merchant) that the limit has been exceeded, shown as step **508**. In an alternative embodiment of the invention, the IPSP module **300** may retrieve the amount of funds stored in the memory within a particular time period (e.g., 24 hours, 36 hours, week, month, quarter, year, etc.). In addition, in another alternative embodiment, the IPSP module **300** is configured for comparing the number of transactions conducted between the customer and the merchant during a particular time period, and if the number of transactions conducted exceeds a pre-determined acceptable limit, then the IPSP module **300** notifies the customer, issuing bank, and/or merchant that the limit has been exceeded.

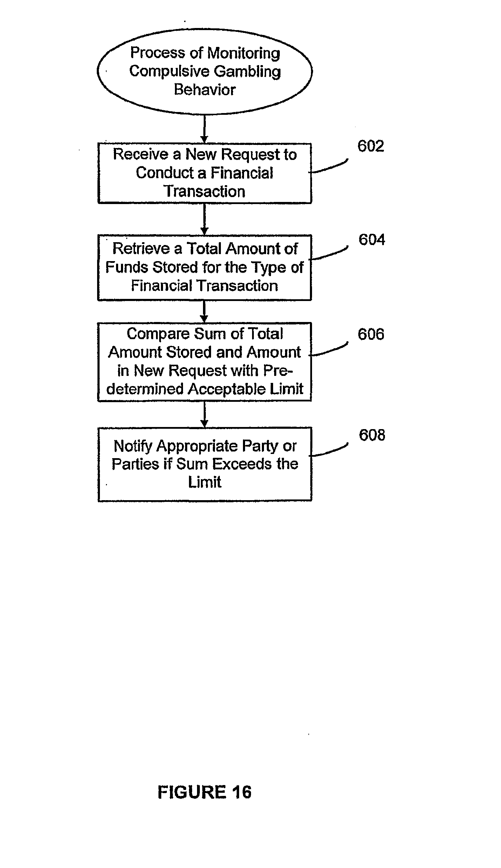

Similarly, Figure 16 illustrates a process of monitoring compulsive gambling behavior according to various embodiments of the invention. Beginning at step **602**, a new request for a financial transaction is received by the IPSP, module **300**. The new request may include an amount of funds and a type of transaction (e.g., transferring funds to the merchant, placing a bet with the merchant, requesting a payout from the merchant). Next, in step **604**, the IPSP module **300** retrieves a total amount of funds stored in the memory **24** for the type of financial transaction in the new request. Then, in step **606**, a sum of the total amount of funds and the amount of funds in the new request are compared with a pre-determined acceptable limit associated with the type of financial transaction in the new request. If the sum exceeds the pre-determined acceptable limit, the IPSP module **300** notifies the appropriate party or parties (e.g., customer, the issuing bank, and/or the merchant) that the limit has been exceeded, which is shown as step **608**. In one embodiment, if the sum exceeds the pre-determined acceptable limit, the new request is denied. Furthermore, the total amount of funds retrieved from the memory may be limited to those funds stored within a particular time period, and the pre-determined acceptable limit may be vary based on the time period being queried.

In addition to monitoring the types of transaction mentioned above, according to various embodiments of the invention, the fraud prevention sub-module **350** may be further configured to monitor payback request transactions and identify suspicious transactions. In response to identifying suspicious payback request transactions, such as by identifying transactions in which the payback request information does not align with information in the original transaction or by identifying a significant number of payback request transactions for a particular payment card during a particular time period (e.g., within a week, a month, or several months), the payment card number may be added to a list of prohibited payment cards, thus preventing future purchasing transactions with the payment card.

In addition to the above filters, according to various embodiments of the invention, the fraud prevention sub-module **350** may further be configured to (1) ensure that each customer only use one payment card and (2) limit payments for certain activities for each customer to a particular frequency during a particular time period (e.g., one payment per day or three payments per 36 hours). Furthermore, according to one embodiment, a ceiling may be set on the amount that can be spent per card or per customer on particular services (e.g., Internet gambling or adult entertainment) during a particular time period (e.g., per day, week, or month). In one embodiment, the ceiling may be set upon request by the customer. In another embodiment, the IPSP system **104** may introduce a default limit on the amount that can be spent on certain activities (e.g. 20% of the credit limit associated with the payment card), which could not be increased without the explicit request of the customer. According to one embodiment, the IPSP system **104** or the merchant system **101, 102, 103** may be configured to present materials to the customer regarding the risk of overspending in response to receiving a request to increase the spending limit, such as via a phone call from a specially trained employee or an email to the customer, and present materials or resources when potential abuse is detected (e.g., Gamblers Anonymous phone numbers, website address, or other materials).

According to various embodiments of the invention, the IPSP system **104** further includes a fraud and abuse database (not shown) that stores results from the fraud prevention module **350**. In one embodiment, the IPSP module 300 accesses the database when processing transactions (step **302**) or when executing the fraud prevention sub-module (step **306**) to determine whether the transaction should be denied based on a prior fraud check for the particular payment card or customer.

As shown in Figure 7B, the fraud prevention sub-module **350** may use one or more of the above described fraud filters to evaluate the transaction information received, according to one embodiment of the invention. Beginning at step **370**, the fraud prevention sub-module **350** receives the transaction data from the IPSP module **300**. Next, in step **372**, the fraud prevention sub-module **350** determines the one or more fraud filters to use in evaluating the transaction data. For example, according to one embodiment, fraud prevention sub-module **350** uses the fraud filters that are previously selected by the merchant to be used. According to another embodiment, the type of fraud filters to be used depends on the type of transaction (e.g., an authorization request, a chargeback request, a settlement request, or a payment request) or whether the stage of the transaction (e.g., whether the transaction information has not yet been sent to the issuing bank or whether it has been authorized by the issuing bank already). In yet another embodiment, the type of fraud filters to be used depends on the country of the IP address associated with the customer. And, in another embodiment, the choice of which fraud filters should be applied is determined by the IPSP and/or the local regulatory authority. Finally, in step **374**, the fraud prevention sub-module **350** executes the appropriate fraud filters to evaluate the transaction data.

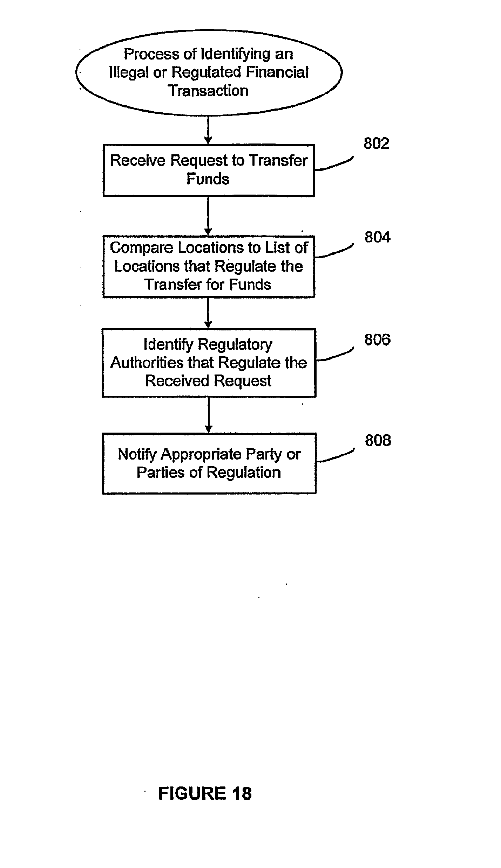

In addition to executing the fraud prevention sub-module **350**, the IPSP module **300** is further configured for identifying financial transactions that are illegal or subject to regulatory restrictions according to various embodiments of the invention. For example, Figure 18 illustrates an exemplary process of identifying an illegal or regulated financial transaction. Beginning at step **802**, the IPSP module **300** receives a request to transfer funds from a customer's payment card to the merchant **31, 32, 33**. The request to transfer funds includes the customer's billing address and the location of the IP address associated with the computing device used by the customer to generate the request. Next, in step **804**, the IPSP module **300** compares the customer's billing address, the location of the IP address, and the location of the merchant **31, 32, 33** with a list of locations that regulate the transfer of funds to the merchant **31, 32, 33**. If any of these locations match a location on the list of locations, the IPSP module **300** determines whether one or more regulatory authorities regulate the transfer of funds in any of these locations, shown as step **806**. If the IPSP module **300** determines that one or more regulatory authorities regulate the transfer of funds, the IPSP module **300** notifies the appropriate party or parties (e.g., customer, the merchant, and/or the issuing bank) of the one or more types of regulations to which the transfer of funds is subject, shown as step **808**. The types of regulations to which a financial transaction may be subject includes a prohibition of the transfer (e.g., a gambling transaction in a state or region in which gambling is illegal) or a limitation on the transfer (e.g., a gambling transaction in a state or region that limits the amount of funds bet).

### ASP Module

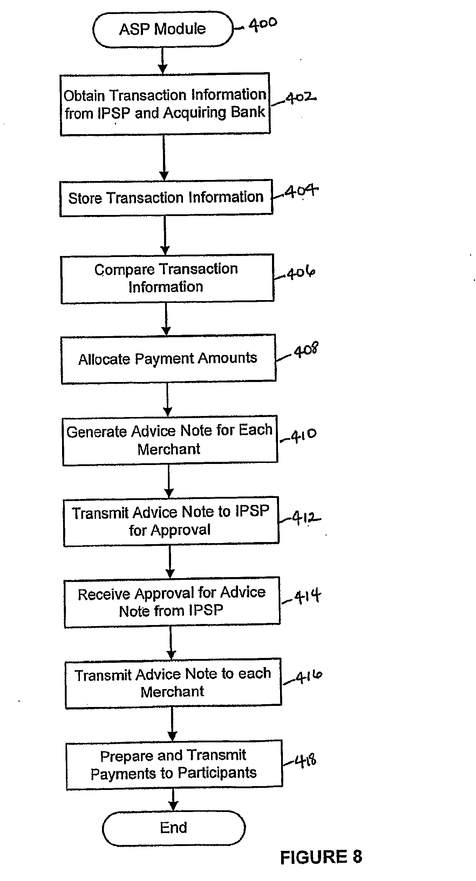

Figure 8 illustrates a block diagram of an ASP module **400** according to various embodiments of the invention. Although the ASP module **400** may be configured to operate on an ASP system **105** according to one embodiment, it may also be configured to operate on the IPSP's system **104** if the IPSP does not contract with an ASP to provide accounting management services according to another embodiment.

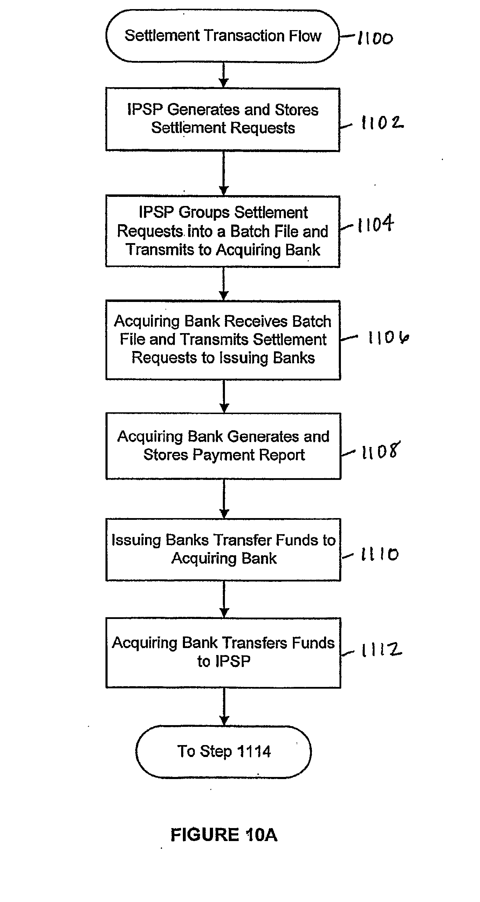

Beginning in step **402**, according to one embodiment, the ASP module **400** obtains transaction information from the IPSP system **104** and the acquiring bank system **106**. The transaction information obtained from the IPSP system **104** may include the following data fields for each transaction: (1) a merchant identification ("MID") number, which is granted by the acquiring bank to identify the merchant or trading entity (e.g., specific website) of the merchant; (2) the date and time of the transaction; (3) the name of the customer; (4) the payment card number or a portion of the payment card number (e.g., the last four digits); (5) the cardholder's email address; (6) the currency of the transaction; (7) the type of payment card used (e.g., Visa, MasterCard, or American Express); (8) the payment amount; (9) an order reference number that the merchant allocated to the transaction; (10) an authorization code, which is a unique code generated by the issuing bank indicating whether the transaction was authorized; (11) the settled status of the transaction (e.g., "100" for completed transactions); (12) the "settled time," which is the time at which the IPSP sent the settlement request to the acquiring bank; (13) the cardholder's street and street number; (14) the cardholder's town; (15) the cardholder's country; (16) the cardholder's postal code; (17) a parent transaction reference, which, in the case of a refund request, is a reference to the original transaction that is being refunded; (18) order information, which merchants can use to include more information about the transaction in if they wish; (18) "site reference," which is the IPSP's reference to the merchant; (19) the type of transaction, which may include authorized transactions, refund transactions, and cancelled transactions (e.g., transactions that are cancelled or for which the amount has changed at the request of the merchant prior to the transfer of money by the issuing bank to the merchant and after a settlement request is transmitted from the IPSP to the acquiring bank); and (20) a unique reference number (URN) that uniquely identifies a transaction in the ASP system **105**. According to one embodiment of the invention, this information may also be included in the settlement requests that are transmitted from the IPSP to the acquiring bank, which is discussed above in relation to step **310** in Figure 6 and below in relation to steps **1102** and **1104** in Figure **10A**. The transaction information obtained from the acquiring bank system **106** may include the total amount of funds requested from the issuing banks, aggregated in one or more batches on a per merchant basis, for example.

According to various embodiments, to obtain the transaction information, the ASP module **400** may access secure web pages (e.g., maintained by each system **104, 106**) on which the transaction information is posted and download the information to the ASP system **105**, receive the transaction information through another type of electronic transmission (e.g, via email or fax), or a combination of both.

In various embodiments, the transaction information obtained in step **402** is stored on the ASP system **105**, as shown in step **404** and the information obtained from the IPSP system **104** is compared to the information obtained from the acquiring bank system **106**, as shown in step **406**. In the embodiment shown in Figure 8, step **406** is shown as occurring after step **404**, but in other embodiments, the steps can occur simultaneously or in reverse order.

According to various embodiments of the invention, in the comparison step **406**, the ASP module **400** identifies any transactions for which the transaction information provided by the IPSP system **104** does not match the transaction information provided by the acquiring bank system **106**. In one embodiment, any non-matching transactions are flagged and reported to the merchant, the IPSP, and/or the acquiring bank in an exception report generated by the ASP module **400**, which is discussed below in more detail in relation to step **410**. In another embodiment in which the acquiring bank system **106** transfers the funds directly into accounts associated with each merchant and maintained by the IPSP **36** and/or the ASP **35**, which is described below in relation to Figure 14, the ASP module **400** is further configured to compare the transaction information provided by the IPSP system **104** and the acquiring bank system **106** with the amounts transferred into each merchant account.

After reconciling the transaction information provided by the IPSP system **104** and the acquiring bank **106**, the ASP module **400** may then allocate payment amounts received during the settlement process to the various participants, which is shown as step **408** in Figure 8. The payment amounts may include, for example, payment amounts to the merchants **31, 32, 33**, commissions owed to the IPSP **34**, the acquiring bank **36**, and the ASP **35**, and a percentage of funds to be deposited in a rolling reserve escrow account **41** for each merchant **31, 32, 33**. For example, according to various embodiments, the various participants may require a certain percentage of funds received by the merchant **31, 32, 33** as payment for their services in the contracts **43, 45, 47, 49** with the merchant **31, 32, 33** and with each other. For example, the acquiring banks **36** may charge 3% of the funds received by the merchant **31, 32, 33** from the issuing banks **37, 38, 39**, the card schemes may charge 1% of the funds transferred using their cards, the IPSP **34** may charge 5% for its payment related services, and the ASP **35** may charge the IPSP **34** 3% of the money received by the IPSP **34** for its accounting management services. As another example, the ASP **35** may also calculate the provisional costs incurred by the IPSP **34** for various services, such as card verification, commission payments to the various participants, and any fees chargeable to the merchants **31, 32, 33** for chargebacks received.

In addition, according to various embodiments, the financial transaction system **100** may establish protocols that specify the percentage of funds that are to be used to fund the rolling reserve escrow account **41**. For example, system protocol may require the ASP module **400** to allocate 7.5% of the funds to be received by each merchant **31, 32, 33** to the rolling reserve escrow account **41** for each merchant **31, 32, 33**. In another example, according to one embodiment, the percentage specified for the rolling reserve account may be automatically increased or decreased depending on the number of payback requests received for the particular merchant **31, 32, 33**. In addition, the ASP module **400**, according to one embodiment, monitors and identifies funds that have remained in the account for the predetermined time period (e.g., six months, one year, or three years) and reallocates those funds to the merchant **31, 32, 33** at the end of the time period. Furthermore, the escrow account **41** is shown in the embodiment in Figure 1 as being part of the ASP system **35**. However, in other embodiments, the escrow account **41** may reside or be maintained by a bank or other financial institution.

Next, in step **410**, the ASP module **400**, according to various embodiments, is configured to generate a reconciliation report, or an "advice note," for each merchant. In one embodiment, the advice note provides each merchant with a summary of the transactions processed for the merchant during a particular time period (e.g., a day or a week), the exception reports (if needed) created in the reconciliation step **406**, a summary of payments allocated to each of the various participants in step **408**, an summary of the activity in the escrow account during the particular time period, and the day on which the payments are to be transferred to the merchant **31, 32, 33**. In another embodiment, the various portions of the advice note are included in separate reports (e.g., an exception report, a payment allocation report, and a transaction summary report). And, in yet another embodiment, the ASP module **400** is configured to generate one or more summary reports for the IPSP **34** and each merchant **31, 32, 33** according to the particular formats specified by each.

In the embodiment shown in Figure 8, the ASP module **400** is further configured to (1) transmit the advice notes for each merchant **31, 32, 33** to the IPSP **34** for approval, which is shown as step **412**, and (2) upon receiving approval for the advice note from the IPSP **34**, which is shown as step **414**, transmit the advice notes to the merchants **31, 32, 33**, which is shown as step **416**. In another embodiment in which the IPSP **34** does not contract with an ASP **35** to provide accounting management services (not shown), steps **412** and **414** may not be performed.

In addition, the ASP module **400** is configured to prepare and transmit payments to the various participants and to the escrow account as shown in step **418**, according to various embodiments of the invention. Step **418** may include, for example, physically sending payment (e.g., checks or cash) to each of the participants, preparing the request for an electronic funds transfer (EFT) from an account associated with the ASP system **105** to the accounts associated with each of the various participants that are owed money, or a combination of both. Furthermore, although the payment step **418** is shown as occurring after step 416 in the embodiment shown in Figure 8, the ASP module **400** according to other embodiments may be configured to perform the payment step **418** simultaneously with or prior to step **416**.

In other embodiments of the invention, the ASP module **400** may be further configured to withhold local or regional taxes on relevant e-commerce transactions (e.g., Internet gambling transactions, or retail purchases) prior to transmitting payments to each merchant **31, 32, 33**. For example, in one embodiment, the ASP module **400** may be configured to apply the applicable tax or licensing rate on the basis of the place of residence or the place of transaction of each customer and/or merchant and transfer the funds directly to the relevant tax or licensing authorities.

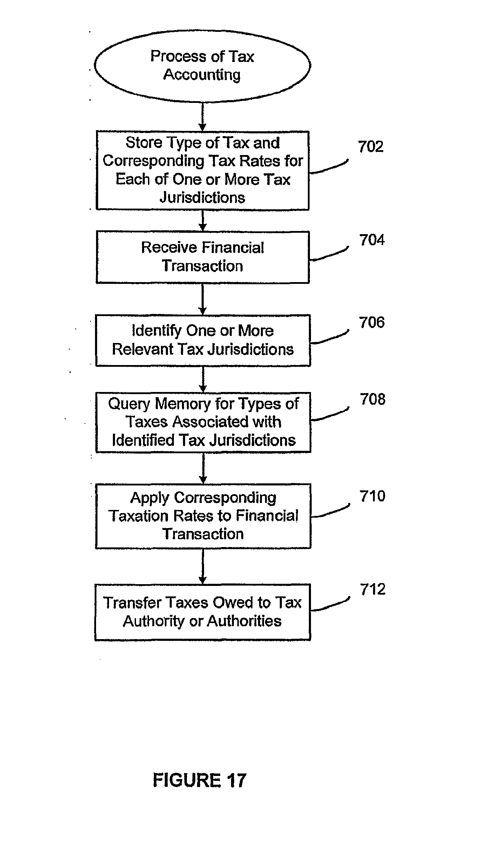

In particular, Figure 17 illustrates an exemplary process of accounting for any taxes owed on a financial transaction. Beginning at step **702**, the appropriate types of tax and corresponding taxation rates for each of one or more tax jurisdictions are stored in the memory **24**. Next, at step **704**, information associated with a financial transaction conducted between a customer and the merchant **31, 32, 33** is received. In response to receiving the information associated with the financial transaction, one or more relevant tax jurisdictions associated with the financial transaction are identified, shown as step **706**. Next, in step **708**, the memory is queried to determine the one or more types of tax associated with the identified tax jurisdictions. If one or more types of tax are associated with the identified tax jurisdictions, then the corresponding taxation rates for the types of tax are applied to the financial transaction to determine the tax owed on the transaction, which is shown as step **710**. In addition, upon determining the tax owned on the transaction, the amount of tax owed is transferred to the relevant tax authorities, shown as step **712**. In various embodiments, taxes may be levied depending on the location of the transaction originator (e.g., merchant), the customer, and/or the location of the computing device from which the customer placed the order.

In various embodiments, the amount of tax withheld and the amount paid to the tax authorities are stored in the system with the transaction information for a period of time, which, in some embodiments, allows for a full audit trail. For example, in one embodiment, the amount due is held in a designated bank account and is paid to the tax authorities periodically (e.g., monthly, weekly, daily, or in real time). In one embodiment, the amount due is paid the tax authorities via electronic funds transfer (EFT).

According to various embodiments, this tax accounting functionality lessens the burden on the merchants, customers, and tax authorities and provides a trustworthy accounting system for taxable transactions. In addition, in one embodiment, the ASP module **400** generates accounting reports for tax authorities that summarize the taxes due and/or taxes collected.

Furthermore, in various embodiments, transaction records may be audited electronically or manually through the ASP module **400**. In particular, the unique reference number ("URN") associated with each transaction is tracked as the transaction is processed through the system. For example, in one embodiment, a plurality of transactions may be grouped into a batch file and sent to the acquiring bank for settlement. The ASP module **400** stores the URN associated with each transaction in the batch file along with information identifying the batch file such that each individual transaction is independently auditable.

### C. Exemplary Processing Flows

### Authorization Processing Flow

Figure 9A illustrates the flow **1000** of processing an authorization request according to various embodiments of the invention. In one embodiment, the processing of the authorization request takes place online while the customer is waiting, and it typically takes about two to twenty seconds to process. If the authorization request is accepted by the issuing bank, the merchant accepts the customer's payment and the issuing bank blocks the amount requested against the credit limit or balance associated with the payment card.

According to various embodiments of the invention, the authorization request process **1000** begins at step **1002** by the merchant **31, 32, 33** receiving a request from a customer to transfer money from the customer's payment card to the merchant's account. The request may include, for example, the amount to be transferred and the customer's information and payment card information (assuming that the merchant does not have the customer's information and payment card information stored from a previous transaction). In one embodiment, the customer and payment card information may include the full name and address of the customer, the customer's email address, and the payment card number, expiration date, and any other identifying information associated with the payment card, In one embodiment, the request may be received by the merchant's system **101, 102, 103** and stored thereon.

Next, in step **1006**, according to various embodiments of the invention, the merchant **31, 32, 33** verifies the format of the information received in the customer's request. In one embodiment, as discussed above in relation to the merchant module **200** shown in Figure 5 and step **204**, the merchant module **200** verifies whether the format of the payment card number is correct and whether all required fields have been completed.

After verifying the format of the information in step **1006**, the merchant **31**, **32, 33** transfers the transaction information to the IPSP **34** for further processing, which is shown as step **1010**. The IPSP **34** receives and stores the transaction information on the IPSP system **104** and transfers to the acquiring bank **36** information needed by the acquiring bank **36** and the issuing banks **37, 38, 39** to process the authorization request, shown as step **1012**. For example, the information may be transferred by the IPSP module **300** to the acquiring bank system **106** and may include the payment card number, the payment amount, and the billing address of the customer, according to various embodiments of the invention.

Next, in step **1014**, the acquiring bank system **106** receives and stores the authorization request on the acquiring bank system **106**. Then, in step **1016**, the acquiring bank system **106** identifies the appropriate card issuer and issuing bank and routes the authorization request to the issuing bank via the appropriate card issuer network (e.g., the VISA, MasterCard, or American Express networks). Upon receiving the authorization request, the issuing bank system 1**07, 108, 109** verifies that the payment card is operational and valid, which is shown as step **1018**, and that sufficient funds are available for the payment card, which is shown as step **1020**. Upon approving the authorization request, the issuing bank system **107**, **108, 109** sends an approval message to the acquiring bank system **106** through the card issuer network, shown as step **1022**, and the acquiring bank system **106** receives the approval message and transmits the approval message to the IPSP system **104** in step **1024**. Then, in step **1026**, the IPSP system **104** receives and stores the approval message and transmits the approval message to the merchant system **101,102,103** that initiated the authorization request.

According to various embodiments, the elementary fraud check and identity/age verification steps (steps **204** and **206**) discussed above in relation to Figure 5 may be performed by the merchant module **200** simultaneously with, before, or after step **1010** of transferring the authorization request information from the merchant to the IPSP. In addition, according to various embodiments of the invention, the step of executing the fraud prevention sub-module **350**, which is shown as step **306** in Figure 6, may be performed by the IPSP module **300** simultaneously with, before, or after step **1012** of transferring the authorization request information from the IPSP to the acquiring bank.

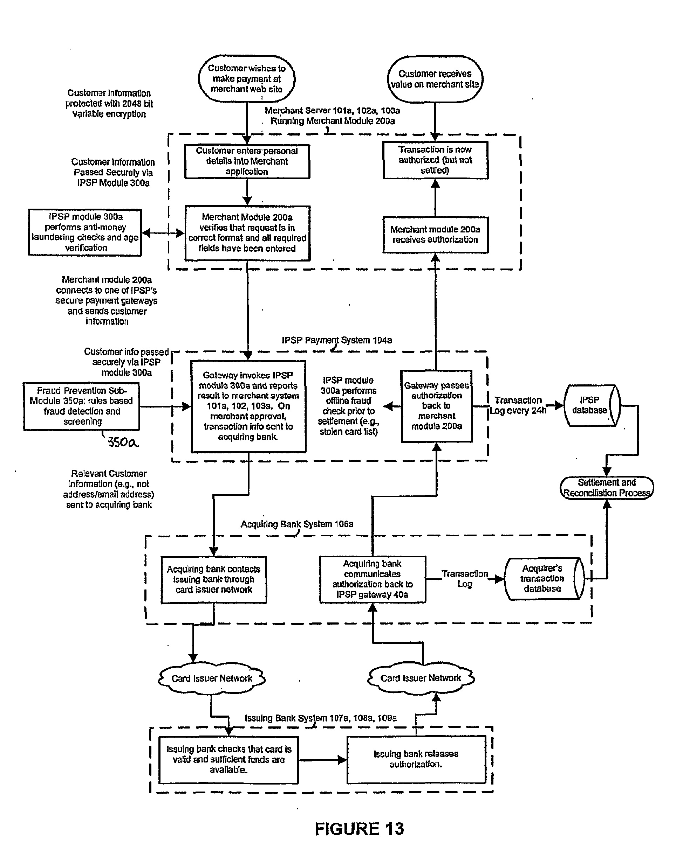

In another embodiment of the invention, shown in Figure 13, the customer's information is encrypted when sent to the merchant system **101a,102a**, **103a** and through the network **115a** to the IPSP system **104a** (e.g., with **2048** bit variable encryption). In addition, the IPSP module **300a** executes one or more of the fraud filters of the fraud prevention sub-module **350a** and, if the fraud filters detect potentially suspicious activity, the IPSP module **300a** sends the results of the fraud check to the merchant for approval prior to sending the authorization requests to the acquiring bank system **106a**. After the merchant provides approval for the transaction, the IPSP module **300a** transmits the authorization request to the acquiring bank, which then transmits the request to the issuing bank. After the acquiring bank receives the authorization message from the issuing bank, the acquiring bank stores the transaction information in a memory area of the acquiring bank system **106a** (e.g., a database) and sends the authorization message to the IPSP system **104a**. The IPSP module **300a** forwards the authorization message to the merchant and may execute one or more fraud filters on the transaction information prior to generating a settlement request for the transaction.

### Settlement Processing Flow

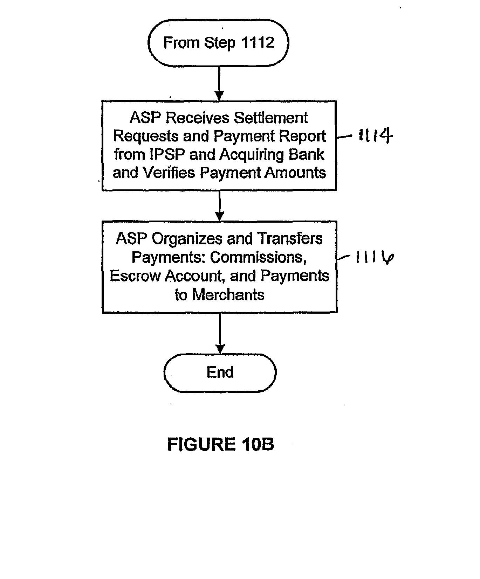

Figures 10A and 10B illustrate the exemplary flow **1100** of processing a settlement request according to various embodiments of the invention. A settlement request, according to various embodiments, is a request generated by the acquiring bank (or the IPSP on behalf of the acquiring bank) to transfer money from the issuing bank to the acquiring bank for payment to the merchant. According to various embodiments of the invention, the settlement request process **1100** begins at step **1102** with the IPSP system **104** generating a settlement request for each merchant **31, 32, 33** and transmitting the settlement requests in a batch file to the acquiring bank **36**. In various embodiments, each settlement request contains the data for transactions that have been handled by the IPSP **34** during a particular time period (e.g., 24 hours, 48 hours, or week). The settlement requests may include authorized and unauthorized transactions or just authorized transactions, according to various embodiments of the invention. Next, according to various embodiments of the invention, in step **1104**, the IPSP system **104** stores the settlement requests on the IPSP system **104**. The settlement requests may be transferred to the ASP system **105** by downloading the settlement requests from a secure part of the IPSP system **104**, or the IPSP **34** may send physical copies or electronic copies of the settlement requests to the ASP **35** (e.g., via email, facsimile, CD, DVD, or floppy disk). The contents of the settlement requests according to various embodiments of the invention are discussed above in relation to Figure 8.

As shown in step **1106**, the acquiring bank **36** receives the batch file and transmits the settlement requests to the appropriate issuing banks **37, 38, 39**. In addition, the acquiring bank **36** generates and stores a payment report for the ASP **35** that summarizes the amount of funds (e.g., aggregate amount of funds) included in each settlement request for each issuing bank **37, 38, 39**, which is shown as step **1108**. One embodiment of the payment report generated by the acquiring bank **36** for the ASP **35** is discussed above in relation to Figure 8.

Then, in step **1110**, the issuing banks **37, 38, 39** transfer the requested funds to the acquiring bank **36**. Next, in step **1112**, the acquiring bank **36** transfers the funds received to the IPSP **34**. Before the IPSP **34** (or the ASP **35**) distributes the funds to the appropriate participants and the escrow account, the ASP system **105** obtains the settlement requests generated by the IPSP system **104** and the payment report generated by the acquiring bank **36** and reconciles the information obtained in step **1114**. The results of the reconciliation performed in step **1114** may be summarized in a reconciliation report (or "advice note'') by the ASP **35** according to various embodiments of the invention. Finally, in step **1116**, the ASP **35** organizes the payments for each participant and the amount for transferring to the escrow account and transfers the payments to the participants and the escrow account.

According to one embodiment, the ASP module **400** is configured to perform steps **1114** and **1116**, which is discussed above in relation to Figure 8. For example, the ASP module **400** summarizes the results from reconciling the data provided by the IPSP and the acquiring bank in a reconciliation report that is sent to each merchant **31, 32, 33** periodically (e.g., daily or weekly). The reconciliation report summarizes the amounts that the merchant **31, 32, 33** can expect to receive in the merchant's bank account by a particular date. In addition, the reconciliation report includes the total amount that customers put in their respective merchant accounts and shows the following deductions and additions: (1) less commission and charges (covering payments to all participants in the payment chain); (2) less a "trust deduct" corresponding to a percentage of the total amount that is withheld for a certain time period (e.g., 6 months or a year) in the rolling reserve escrow account as security against chargebacks and refunds; (3) plus the "trust money" that was withheld during the certain time period and one day before the date of the advice note; (4) less any chargebacks communicated by the acquiring bank on the day of the advice note relating to previous transactions. Before transferring funds to the appropriate participants and the rolling reserve escrow account, the IPSP **34** reviews the reconciliation reports, including the dates on which payments are indicated to be paid, Upon receiving the approval of the IPSP 34 for the reconciliation reports, the ASP **35** transmits the reconciliation reports to the various merchants **31, 32, 33** and transfers the payments to the appropriate participants and the escrow account. In one embodiment, the transfer of funds may occur after the reconciliation reports are generated and approved. In another embodiment, the transfer of funds may occur prior to approval of the reconciliation reports.

According to the alternative embodiment shown in Figure 14, the funds are directly deposited by the acquiring bank into an account for each corporate entity associated with each merchant (e.g., SG1, SG2, SG3, etc.). In addition, the ASP module **400a** is further configured for reconciling the amounts received into each account with the settlement requests and the payment report obtained from the IPSP and the acquiring bank, respectively. In one embodiment, any amount not paid out of the account to the various participants or the escrow account is paid to the merchant.

### Chargeback Processing Flow

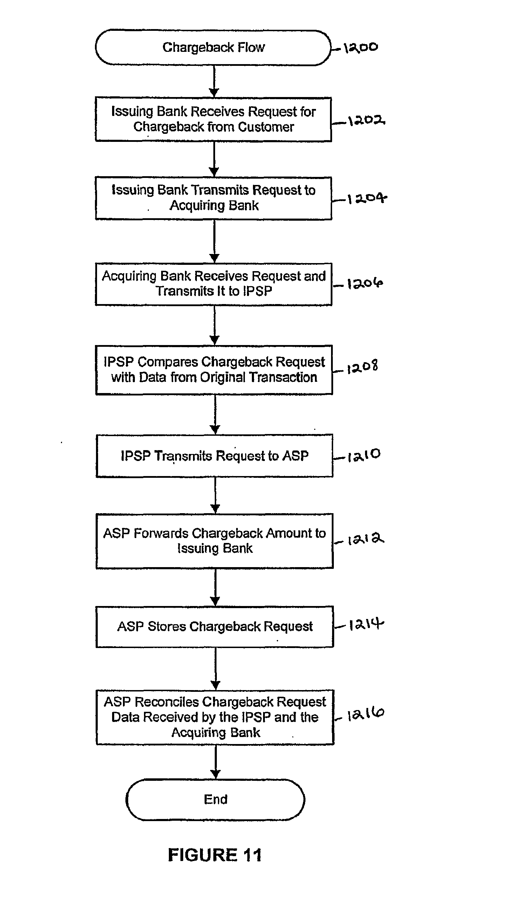

Chargeback requests are requests initiated by an issuing bank on behalf of a customer to refund a particular charge to the customer's payment card account. For example, an issuing bank may initiate a chargeback request in response to a customer contesting a charge on the customer's payment card that the customer asserts was not authorized by the customer. Figure 11 illustrates the exemplary flow **1200** of processing chargeback requests according to various embodiments of the invention.

Beginning at step **1202**, the issuing bank **37, 38, 39** receives a request for a chargeback from a customer. Then, at step **1204**, the issuing bank **37, 38, 39** transmits the chargeback request to the acquiring bank 36. The acquiring bank **36** receives the chargeback request and transmits it to the IPSP **34** in step **1206.** Next, at step **1208**, the IPSP **34** compares the chargeback request with the data from the original transaction. If the data in the chargeback request appears to match the data from the original transaction, the IPSP **34** transmits the request to the ASP **35** in step **1210**. The comparison and transmittal steps **1208** and **1210** may be performed by the IPSP module **300** according to various embodiments of the invention as described above. Next, in step **1212,** according to various embodiments of the invention, the ASP **35** forwards the chargeback amount from the merchant's escrow account to the acquiring bank **36**, which then forwards the chargeback amount to the issuing bank **37, 38, 39** that initiated the chargeback request. In an alternative embodiment, the ASP **35** pays the chargeback amount to the issuing bank **37, 38, 39** by deducting it from the total amount that should be paid to the merchant **31, 32, 33** in the settlement request. Then, in step **1214**, the ASP **35** stores the chargeback request. In various embodiments of the invention, the ASP module **400** is configured to perform steps **1212** and *1214*.

If in step **1208** the chargeback request data does not match the data from the original transaction, the chargeback request may be flagged, according to various embodiments of the invention. In addition, if the number of flagged chargeback requests associated with a particular payment card exceed a certain number within a particular time period (e.g., two chargeback requests within a week or a month), the IPSP may include the particular payment card number on a list of payment cards that should not be accepted for payment by the merchant in the future (e.g., in the fraud and abuse database maintained by the IPSP **34**).

In addition to the above, according to various embodiments, the ASP **35** reconciles chargeback requests processed by the acquiring bank **36** and the IPSP **34** during a particular time period (e.g., daily or weekly) with the transaction data from the original transactions. To reconcile the requests, the ASP **35** obtains a chargeback transaction report generated by the acquiring bank **36** and a chargeback transaction report generated by the IPSP **34** and compares the two reports with the data from the original transactions, shown as step **1216**. In one embodiment, the comparison step **1216** is performed by linking the data in the chargeback reports with the data from the original transactions that has been stored in the memory of the ASP system **105**. According to one embodiment, the chargeback data reports contain at least a portion of the following information: (1) reference to the original transaction that is being charged back; (2) the MID number; (3) the date that the chargeback request is made; (4) a description of the transaction as a "chargeback"; (5) the full card number; (6) the reference number granted by the acquiring bank; (7) a "reason code," which is a code number issued by the card issuer that indicates why the chargeback was initiated by the cardholder; (8) a description of why the chargeback was initiated; (9) type of currency for the chargeback amount; (10) chargeback amount; (11) the card number or portion thereof (e.g., first four digits of card number) provided by the acquiring bank; (12) the date that the original transaction was "posted" or authorized; (13) the date the original transaction took place; (14) the "type" of the original transaction; (15) the currency of the original transaction; (16) the amount of the original transaction; (17) the currency in which the transaction was settled; (18) the amount that was settled; (19) the original "default" currency provided by the acquiring bank; (20) the original "default currency" amount provided by the acquiring bank; (21) the "original slip," which is a reference to the "batch" of transactions that the transaction was part of when the acquiring bank released its data about the transactions of a particular day to the IPSP; (22) the "item slip" of the acquiring bank; (23) the authorization code of the original transaction; (24) the "batch number" of the acquiring bank; and (25) the "merchant DBA name," which is the name of the merchant as it appears on the customer's payment card statement. As described above in relation to Figure 8, the ASP module **400** may be configured to perform this reconciliation step **1216** according to various embodiments of the invention.

According to various embodiments of the invention, the reports may be posted to the IPSP system **104** and the acquiring bank system **106** and downloaded by the ASP system **105**, or the reports may be transmitted physically or electronically via email, facsimile, CD, DVD, or floppy disk, for example.

### Payment Processing Flow

In some e-commerce sectors (e.g., gambling), money may need to be paid back to the customer. Paying the customer money may raise concerns about the risk of abuse for money laundering, especially with respect to Internet gambling. According to various embodiments of the invention, the system **100** addresses some of the risks associated with e-commerce transactions by exclusively making payments to the payment card account used by the customer to make the original payment to the merchant, creating a fully transparent "closed loop" between the customer and the merchant. Thus, according to one embodiment, funds originate from and flow back to the same account and all money flows are traceable, which makes e-commerce unattractive for money laundering schemes.

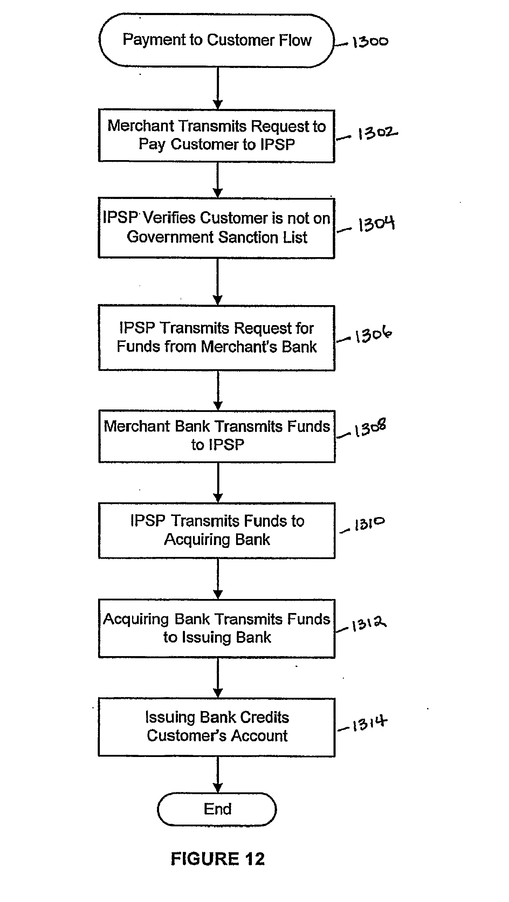

For example, Figure 12 illustrates an exemplary flow **1300** of processing and transmitting payment to a customer when the customer submits a payment request. Beginning at step **1302**, the merchant receives a request from the customer for payment and transmits the request to the IPSP. Next, in step **1304**, the IPSP verifies that the customer is not included on a government or local authority sanction list (e.g., "Specially Designated Nationals list" published by the U.S.). In addition, according to one embodiment, the IPSP verifies that the nationality of the customer (e.g., based on the customer's billing address or the IP address of the customer's computing device) is not on a list of prohibited countries in which merchants may conduct business. According to various embodiments, if the customer (or customer's country) is on the list, the payment request cannot be processed by the system **100** and the request is denied. If the customer is not included on the sanction list(s) (or is not associated with a prohibited country), the IPSP. **34** transmits the payment request to the merchant's bank, which is shown as step **1306**. In response to receiving the request and verifying that the payment funds are in the merchant's account, the merchant bank transmits the funds to the IPSP **34**, which is shown as step **1308**. After the IPSP **34** has received the funds and stored a record of them in the IPSP system **104**, the IPSP **34** transfers the funds to the acquiring bank **36** as shown in step **1310**. Next, in step **1312**, upon receiving the funds, the acquiring bank **36** transmits the funds to the issuing bank **37, 38, 39** that is associated with the customer's payment card that was used to make purchases (e.g., place bets) on the merchant's website. According to various embodiments, in step **1314**, the issuing bank **37, 38, 39** may then credit the account associated with the payment card for the amount received from the merchant **31, 32, 33**, or the issuing bank **37, 38, 39** may send a check to the customer that is listed as the card holder.

### E-Wallet

In yet another embodiment of the invention (not shown), the financial transaction system **100** is configured to allow customers to purchase electronic tokens from the IPSP **34**, which can then be used with participating merchants **31, 32, 33** for the agreed value, creating a prepaid "e-wallet" account. According to various embodiments, the features of the financial transaction system **100** are extendable to the e-wallet system. For example, instead of the merchant **31, 32, 33** receiving the request from the customer to transfer funds from the account associated with the customer's payment card to the merchant's account, the IPSP **34** receives the request to transfer funds from the customer's e-wallet account to the IPSP's account. According to one embodiment, the IPSP **34** executes the steps of the merchant module **200** and the IPSP module **300** to generate and process the authorization and settlement requests with the issuing bank. Upon settlement, the IPSP **34** credits an e-wallet account for the customer with an amount of electronic tokens representative of the amount of funds transferred. The customer can use the tokens with participating merchants **31, 32, 33** to make purchases. Periodically (e.g., daily or weekly), the IPSP **34** transfers funds to each merchant.31**, 32, 33** that are representative of the amount of tokens spent at each merchant's website. In one embodiment, the ASP **35** manages the e-wallet accounts and allocates payments from the IPSP **34** to the participating merchants **31, 32, 33 .**

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for the purposes of limitation.

Further aspects of the invention include :
1. A system for processing a financial transaction conducted with an online merchant, the system comprising:
   a payment service provider module configured for:
      receiving a request to transfer funds from a customer account to an online merchant, the request comprising a first location associated with the customer's address and a second location of a computing device that generated the request, the second location being associated with an Internet protocol address issued to the computing device that generated the request and the payment service provider module being configured to detect the Internet protocol address automatically when the request to transfer funds is received;
      in response to receiving the request, comparing the first location, the second location, and a location of the online merchant with a list of locations that regulate the transfer of funds to the online merchant;
      in response to the first location, the second location, or the location of the online merchant matching a location on the list of locations, determining whether one or more regulatory authorities regulate the transfer of funds from the customer account to the online merchant in the first location, the second location, or the location of the online merchant; and
      in response to determining that the one or more regulatory authorities regulate the transfer of funds to the online merchant in the first location, the second location, or the location of the online merchant, notifying one or more of the customer, the merchant, or a bank associated with an account of the customer associated with the financial transaction of one or more types of regulations to which the transfer of funds is subject,
      wherein the one or more types of regulations comprise one or more of a prohibition of the transfer, a limitation on the transfer, or a tax on the transfer.
2. The system of 1 wherein the second locations is associated with an internet protocol address issued to the computing device that generated the request.
3. A system for processing a financial transaction conducted between a customer and an online merchant, the system comprising:
   a payment service provider module independent of the merchant and the customer configured for:
      receiving a request to conduct a financial transaction between a customer account and an online merchant, the request comprising a first location associated with the customer's address and a second location of a computing device that generated the request;
      in response to receiving the request, comparing the first location, the second location, and the location of the merchant with a list of locations that regulate financial transactions conducted with the online merchant;
      in response to the first location, the second location, or the location of the merchant matching a location on the list of locations, determining whether one or more regulatory authorities regulate financial transactions conducted with the online merchant in the first location, the second location, or the location of the online merchant; and
      in response to determining that the one or more regulatory authorities regulate financial transactions in the first location, the second location, or the location of the merchant, notifying one or more of the customer, the merchant, or a bank associated with an account of the customer associated with the financial transaction of a type of regulation to which the financial transaction is subject,
4. The system of 2 wherein the payment services provider module is further configured (a) for determining the second location by automatically determining an Internet protocol address of the computing device that generated the request when the request to transfer funds is received; and (b) for preventing the financial transaction from being conducted with the merchant in response to determining that the one or more regulatory authorities regulate financial transactions conducted with the online merchant in the first location, the second location, or the location of the online merchant.
5. The system of 2 wherein the payment services provider module is further configured for notifying one or more of the online merchant or the bank associated with the customer's account in response to determining that the one or more regulatory authorities regulate financial transactions conducted with the online merchant in the first location, the second location, or the location of the online merchant.
6. The system of 2 wherein the financial transaction is a request to place a gambling bet with the online merchant or a request for a payout resulting from one or more gambling bets.
7. The system of 2 wherein the financial transaction is a request to transfer funds to the online merchant.
8. The system of 3 wherein the financial transaction is a request for a payout resulting from one or more gambling bets placed with the online merchant.
9. A tax accounting system for financial transactions conducted with online merchants, the system comprising:
   a memory configured for storing one or more types of tax and corresponding taxation rates for each of one or more tax jurisdictions;
   a processor configured for:
      receiving information associated with a financial transaction conducted with an online merchant from a customer;
      in response to receiving the information associated with the financial transaction, identifying one or more tax jurisdictions associated with the financial transaction;
      in response to identifying the one or more tax jurisdictions associated with the financial transaction, querying the memory to determine whether one or more types of tax are associated with the one or more tax jurisdictions;
      in response to determining that one or more types of tax are associated with the one or more tax jurisdictions, applying the corresponding taxation rates for each of the one or more types of tax to the information associated with the financial transaction to determine an amount of tax owed;
      in response to determining the amount of tax owed, transferring the amount of tax owed to one or more relevant tax authorities;
10. The tax accounting system of 7 wherein the one or more tax jurisdictions are associated with one or more of a location of the online merchant, a location of the customer, or a location of a computing device used by the customer to conduct the financial transaction.
11. The tax accounting system of 7 wherein the processor is further configured for transferring the amount to the one or more relevant tax authorities via electronic funds transfer.
12. Storing the amount of tax owed and the amount transferred to the one or more relevant tax authorities in the memory with the financial transaction information for a particular period of time.
13. Generating an accounting report for each of the one or more relevant tax authorities, the accounting report comprising the amount of taxes owed to the relevant tax authority, the amount of tax transferred to the relevant tax authority, and at least a portion of the information associated with the financial transaction for which taxes were paid to the relevant tax authority.
14. A system for processing a financial transaction with an online merchant, the system comprising:
   a payment service provider module configured for:
      receiving a request to transfer funds from a customer account to an online merchant;
      in response to receiving the request to transfer funds, allocating a portion of the funds to be paid to the online merchant to an escrow account; and
      in response to allocating the portion of the funds to be paid to the online merchant to an escrow account, storing the allocated portion of funds in the escrow account for the lesser of a predetermined period of time or until a request for a chargeback or refund request is received by the system.
15. The system of 14 wherein the payment service provider module is further configured for periodically generating a reconciliation report for each online merchant, the reconciliation report listing transfer requests that have been received and ortions of funds that have been allocated to the escrow account.
16. The system of 10 wherein the request is received from a merchant computing device in communication with the payment services provider module over a network.
17. The system of 14 further comprising a fraud prevention module configured for applying one or more fraud filters to the request, said one or more fraud filters being selected from one or more of the following:
   (1) comparing a first location associated with the customer account with a second location associated with a customer computing device used to transmit the request to the online merchant, and in response to the first location being outside of a first predetermined acceptable distance of the second location, marking the request as potentially fraudulent;
   (2) comparing a third location associated with a customer email address with the second location, and in response to the third location being outside of a second predetermined acceptable distance of the second location, marking the request as potentially fraudulent;
   (3) comparing a fourth location associated with a customer billing address for the customer account with the second location, and in response to the fourth location being outside of a third predetermined acceptable distance of the second location, marking the request as potentially fraudulent;
   (4) comparing a customer identification with a list of individuals prohibited from conducting financial transactions, and in response to the customer identification matching one of the individuals on the list, marking the request as potentially fraudulent; or
   (5) comparing an identification of a customer account with a list of accounts prohibited from conducting financial transactions, and in response to the identification of the customer account matching one of the accounts on the list, marking the request as potentially fraudulent.
18. The system of 14 wherein the payment service provider module is further configured for:
   receiving a chargeback request for funds previously transferred to the merchant from the customer account; and
   in response to receiving the chargeback request, funding the chargeback request from the funds stored in the escrow account.
19. The system of 14 wherein the payment service provider module is further configured for:
   receiving a refund request for funds previously transferred to the merchant from the customer account; and
   in response to receiving the refund request, funding the refund request from the funds stored in the escrow account.
20. A system for processing a payback request received from a customer, said system comprising:
   means for establishing an escrow account for a merchant, the escrow account being funded by a portion of funds to be paid to the merchant from one or more accounts associated with one or more customers;
   means for receiving a payback request for a payment previously made to the merchant from an account associated with a particular customer; and
   means for funding the payback request with funds stored in the escrow account.
21. The system of 16 further comprising means for transferring the portion of the funds to the merchant in response to the portion of funds being stored in the escrow account for a particular time period.
22. The system of 16 further comprising means for transferring the portion of the funds to the merchant in response to the portion of funds being stored in the escrow account for at least six months.
23. The system of 16 further comprising:
   means for reducing the portion of funds to be paid by the merchant into the escrow account in response to the merchant receiving a reduced number of payback requests over a particular time period; and
   means for increasing the portion of funds to be paid by the merchant into the escrow account in response to the merchant receiving an increased number of payback request over said particular time period.
24. The system of 16 wherein the means for funding the payback request comprises a means for funding the payback request without dispute.
25. The system of 16 wherein the merchant is an online merchant.
26. The system of 16 further comprising a means for applying one or more fraud filters to the payback request, the one or more fraud filters configured for identifying potentially fraudulent payback requests.
27. The system of 22, wherein the one or more fraud filters are executed by a fraud prevention module implemented on a computer readable medium.
28. The system of 27 wherein the payback request is a chargeback request.
29. The system of 27 wherein the payback request is a refund request.
30. A system of processing a payback request received from a customer, said system comprising:
   means for receiving a payback request for a payment previously made to a merchant with an account associated with a customer; and
   means for funding the payback request to the customer with funds stored in an account associated with the merchant without dispute.
31. The system of 30 wherein the payback requst is a chargeback request or a refund request.
32. The system of 27 wherein the payback request is received from a financial institution holding the account associated with the customer.
33. The system of 29 wherein the funds for the payback request are paid to a financial institution holding the account associated with the customer.
34. A fraud prevention system for identifying potentially fraudulent online financial transactions received from a customer for an online merchant, the system comprising a fraud prevention module configured for:
   applying one or more fraud filters to each of one or more financial transactions received from one or more customers, the one or more fraud filters being selected from one or more of the following:
      (1) comparing a first location associated with the customer account with a second location associated with a customer computing device used to transmit the request to the online merchant, and in response to the first location being outside of a first predetermined acceptable distance of the second location, marking the request as potentially fraudulent;
      (2) comparing a fourth location associated with a customer billing address for the customer account with the second location, and in response to the fourth location being outside of a third predetermined acceptable distance of the second location, marking the request as potentially fraudulent;
      (3) comparing a customer identification with a list of individuals prohibited from conducting financial transactions, and in response to the customer identification matching one of the individuals on the list, marking the financial transaction as potentially fraudulent; or
      (4) comparing an identification of a customer account with a list of accounts prohibited from conducting financial transactions, and in response to the identification of the customer account matching one of the accounts on the list, marking the financial transaction as potentially fraudulent; and
   in response to the financial transaction being marked as potentially fraudulent, storing information associated with the financial transaction in a fraud database.
35. The system of 34 wherein the one or more improper transaction filters further includes: comparing a third location associated with a customer email address with the second location, and in response to the third location being outside of a second predetermined acceptable distance of the second location, marking the financial transaction as potentially fraudulent.
36. The system of 34 wherein the one or more fraud filters further includes; comparing information associated with one or more subsequent financial transactions to the financial transactions stored in the fraud database, and in response to the customer account, customer identification, or customer billing address of each of the one or more subsequent financial transactions matching any of the financial transactions stored in the fraud database, marking the one or more subsequent financial transactions as potentially fraudulent.
37. The system of 34 wherein the one or more improper transaction filters further includes: comparing the first location with the third location, and in response to the first location being outside of a first predetermined acceptable distance of the third location, marking the financial transaction as potentially fraudulent.
38. The system of 34 wherein the second location comprises a country, and the one or more improper transaction filters further includes: comparing the second location with a list of countries that are prohibited from conducting financial transactions with the merchant, and in response to the second location being on the list of countries, preventing the financial transaction from being conducted.
39. The system of 34 wherein the list of accounts prohibited from conducting financial transactions is a list of stolen accounts.
40. The system of 34 wherein the first location is a location associated with a financial institution that manages the customer account.
41. The system of 34 wherein the first location is a billing address associated with the customer account.
42. The system of 34 wherein the first location, the second location, the third location, and the fourth location are selected from one or more of a country, a region, a state, a locality, a county, a city, or a postal district defined by one or more postal codes.
43. The system of 34 wherein the list of individuals is published by a government authority.
44. The system of 34 wherein the list of accounts is published by a government authority.
45. The system of 34 wherein:
   the payment service provider module is further configured for receiving a payback request for the customer; and
   the fraud prevention module is further configured for comparing an identity of the customer requesting the payback to a list of officers, directors, or owners associated with the online merchant, and in response to the customer being on the list of directors, officers, or owners, marking the payback request as potentially fraudulent.
46. The system of 34 wherein the financial transaction is a gambling payout request and the fraud prevention module is further configured for comparing an identification of an account named by the customer for receiving a payout from the merchant with an identification of an account used by the customer to place bets with the merchant, and in response to the identification of the account named for receiving the payout not matching the identification of the account used to place bets with the merchant, marking the payout request as potentially fraudulent.
47. The system of 46 wherein the fraud prevention module is further configured for preventing a payout amount provided in the payout request from being transferred to the account named for receiving the payout.
48. The system of 46 wherein the account named for receiving the payout request is associated with a first payment card and the account used to place bets with the merchant is associated with a second payment card, and the fraud prevention module is further configured for comparing the first payment card to the second payment card, and in response to the first payment card not matching the second payment card, marking the payout request as potentially fraudulent.
49. The system of 34 wherein the one or more improper transaction filters are selected based on the location of the merchant.
50. The system of 34 wherein the one or more improper transaction filters are selected based on the second location.
51. The system of 34 wherein the one or more improper filters are selected based on the first location.
52. A system for monitoring a compulsive spending behavior of a customer, said system comprising a processor and a memory, said processor configured for:
   storing, in the memory information associated with each of one or more requests from the customer to conduct financial transactions with a merchant, the information comprising an amount of funds;
   receiving a new request to conduct a financial transaction with the merchant, the request comprising an amount of funds;
   in response to receiving the new request, retrieving a total amount of funds stored in the memory;
   comparing a sum of the total amount of funds and the amount of funds in the new request with a pre-determined acceptable limit; and
   in response to the sum exceeding the pre-determined acceptable limit, notifying one or more of the customer, a payment source associated with the customer, or the merchant that the pre-determined acceptable limit has been exceeded.
53. The system of 52 wherein the information stored in the memory further comprising a date on which each request was received by the merchant; and wherein the processor is further configured for comparing the sum of the total amount of funds stored in the memory within a particular time period and the amount of funds in the new request with the pre-determined acceptable limit.
54. A system for monitoring a compulsive gambling behavior of a customer, said system comprising a processor and a memory, said processor configured for:
   storing, in the memory, information associated with each of one or more requests from the customer to conduct a financial transaction with the merchant, the information comprising an amount of funds and a type of financial transaction, said type of financial transaction being selected from two or more types of financial transactions;
   receiving a new request to conduct a financial transaction with the merchant, the request comprising an amount of funds and identifying a type of financial transaction;
   in response to receiving the new request, retrieving a total amount of funds stored in the memory for the type of financial transaction identified in the new request;
   comparing a sum of the total amount of funds and the amount of funds in the new request with a pre-determined acceptable limit associated with the type of financial transaction identified in the new request; and
   in response to the sum exceeding the pre-determined acceptable limit, notifying one or more of the customer, a payment source associated with the customer, or the merchant that the pre-determined acceptable limit has been exceeded.
55. The system of 51 wherein the two or more types of transactions comprise a request to transfer funds to the merchant from an account associated with the customer.
56. The system of 51 wherein the two or more types of transactions comprise a request to place a bet using funds previously transferred to the merchant.
57. The system of 51 wherein the one or more requests and the new request are received by a computing device associated with the merchant from one or more computing devices associated with the customer over a network.
58. The system of 51 wherein the processor is further configured for preventing the new request from being processed in response to the sum exceeding the pre-determined acceptable limit.
59. The system of 51 wherein the information stored in the memory further comprises a date on which each of the one or more requests was received by the merchant; and wherein the processor is further configured for comparing the sum of the total amount of funds requested by the customer within a particular time period and the amount of funds in the new request with the pre-determined acceptable limit.
60. A system for monitoring a compulsive spending behavior of a customer, said system comprising a processor and a memory, said processor configured for:
   storing, in the memory, information associated with each of one or more requests from the customer to transfer an amount of funds and a date on which the request was received by the merchant;
   receiving a new request to transfer funds to the merchant;
   in response to receiving the new request, retrieving a number of transactions stored in the memory within a particular time period;
   comparing the total number of transactions with a pre-determined acceptable limit; and
   in response to the total number of transactions being below or above the pre-determined range, notifying one or more of the customer, a payment source associated with the customer, or the merchant that the customer's spending behavior has changed.

## Claims

**1.** A system for processing a financial transaction with an online merchant, the system comprising:
a payment service provider module configured for:
receiving a request to transfer funds from a customer account to an online merchant;
after receiving the request to transfer funds, allocating a portion of the funds to be paid to the online merchant to an escrow account to be used to fund payback requests;
after allocating the portion of the funds to be paid to the online merchant to an escrow account, storing the allocated portion of funds in the escrow account for the lesser of a predetermined period of time or until a payback request is received;.
reducing the portion of funds to be paid by the merchant into the escrow account after the merchant receives a reduced number of payback requests over a particular time period; and
increasing the portion of funds to be paid by the merchant into the escrow account after the merchant receives an increased number of payback requests over said particular time period.

**2.** The system of Claim 1 wherein the payment service provider module is further configured for periodically generating a reconciliation report for each online merchant, the reconciliation report listing transfer requests that have been received and portions of funds that have been allocated to the escrow account.

**3.** The system of Claim 1 wherein the request is received from a merchant computing device in communication with the payment services provider module over a network.

**4.** The system of Claim 1 further comprising a fraud prevention module configured for applying one or more fraud filters to the request, said one or more fraud filters being selected from one or more of the following:
(1) comparing a first location associated with the customer account with a second location associated with a customer computing device used to transmit the request to the online merchant, and in response to the first location being outside of a first predetermined acceptable distance of the second location, marking the request as potentially fraudulent;
(2) comparing a third location associated with a customer email address with the second location, and in response to the third location being outside of a second predetermined acceptable distance of the second location, marking the request as potentially fraudulent;
(3) comparing a fourth location associated with a customer billing address for the customer account with the second location, and in response to the fourth location being outside of a third predetermined acceptable distance of the second location, marking the request as potentially fraudulent;
(4) comparing a customer identification with a list of individuals prohibited from conducting financial transactions, and in response to the customer identification matching one of the individuals on the list, marking the request as potentially fraudulent; or
(5) comparing an identification of a customer account with a list of accounts prohibited from conducting financial transactions, and in response to the identification of the customer account matching one of the accounts on the list, marking the request as potentially fraudulent.

**5.** The system of Claim 1 wherein the payment service provider module is further configured for:
receiving a payback request for funds previously transferred to the merchant from the customer account; and
after receiving the payback request, funding the payback request from the funds stored in the escrow account.

**6.** The system of Claim 1 wherein predetermined period of time is six months and the payment service provider module transfers the portion of the funds to the merchant after the portion of funds has been stored in the escrow account for at least six months.

**7.** The system of Claim 1 wherein the merchant is an online merchant.

**8.** The system of Claim 1 wherein the payback request is a chargeback request.

**9.** The system of Claim 1 wherein the payback request is a refund request.

**10.** The system of Claim 1 wherein the payment service provider module funds the payback request with the funds stored in the escrow account when the merchant does not have funds available for funding the payback request outside of the funds stored in the escrow account.

**11.** A method for processing a financial transaction with an online merchant, the method comprising the steps of:
receiving a request to transfer funds from a customer account to an online merchant;
after receiving the request to transfer funds, allocating a portion of the funds to be paid to the online merchant to an escrow account to be used to fund payback requests;
after allocating the portion of the funds to be paid to the online merchant to an escrow account, storing the allocated portion of funds in the escrow account for the lesser of a predetermined period of time or until a payback request is received;.
reducing the portion of funds to be paid by the merchant into the escrow account after the merchant receives a reduced number of payback requests over a particular time period; and
increasing the portion of funds to be paid by the merchant into the escrow account after the merchant receives an increased number of payback requests over said particular time period.

**11.** The method of Claim 10 further comprising the steps of:
selecting one or more fraud filters from one or more of the following:
(1) comparing a first location associated with the customer account with a second location associated with a customer computing device used to transmit the request to the online merchant, and in response to the first location being outside of a first predetermined acceptable distance of the second location, marking the request as potentially fraudulent;
(2) comparing a third location associated with a customer email address with the second location, and in response to the third location being outside of a second predetermined acceptable distance of the second location, marking the request as potentially fraudulent;
(3) comparing a fourth location associated with a customer billing address for the customer account with the second location, and in response to the fourth location being outside of a third predetermined acceptable distance of the second location, marking the request as potentially fraudulent;
(4) comparing a customer identification with a list of individuals prohibited from conducting financial transactions, and in response to the customer identification matching one of the individuals on the list, marking the request as potentially fraudulent; or
(5) comparing an identification of a customer account with a list of accounts prohibited from conducting financial transactions, and in response to the identification of the customer account matching one of the accounts on the list, marking the request as potentially fraudulent; and
applying one or more selected fraud filters to the request.

**12.** The method of Claim 10 further comprising the steps of:
receiving a payback request for funds previously transferred to the merchant from the customer account; and
after receiving the payback request, funding the payback request from the funds stored in the escrow account.

**13.** The method of Claim 10, wherein predetermined period of time is six months and the method further comprises the step of transferring the portion of the funds to the merchant after the portion of funds has been stored in the escrow account for at least six months.

**14.** The method of Claim 10 further comprising the step of funding the payback request with the funds stored in the escrow account when the merchant does not have funds available for funding the payback request outside of the funds stored in the escrow account.
